(19) Europäisches Patentamt
European Patent Office
Office européen des brevets

(11) Veröffentlichungsnummer: **0 184 012**
**B1**

(12) # EUROPÄISCHE PATENTSCHRIFT

(45) Veröffentlichungstag der Patentschrift: **07.01.88**

(21) Anmeldenummer: **85114111.9**

(22) Anmeldetag: **06.11.85**

(51) Int. Cl.[4]: **C 09 K 19/42**, C 09 K 19/34, C 09 K 19/32, C 09 K 19/30, C 07 C 69/773, C 07 C 125/067, C 07 C 125/075, C 07 C 153/11, C 07 C 149/273

(54) **Flüssigkristallzusammensetzungen.**

(30) Priorität: **16.11.84 DE 3441936**
**23.07.85 DE 3526235**

(43) Veröffentlichungstag der Anmeldung: **11.06.86 Patentblatt 86/24**

(45) Bekanntmachung des Hinweises auf die Patenterteilung: **07.01.88 Patentblatt 88/1**

(84) Benannte Vertragsstaaten: **CH DE FR GB LI**

(56) Entgegenhaltungen:
**EP - A - 0 090 183**
**EP - A - 0 107 759**
**GB - A - 2 098 986**
**US - A - 4 424 372**

(73) Patentinhaber: **BAYER AG, Konzernverwaltung RP Patentabteilung, D-5090 Leverkusen 1 Bayerwerk (DE)**

(72) Erfinder: **Claussen, Uwe, Dr., Carl-Rumpff-Strasse 29, D-5090 Leverkusen 1 (DE)**
Erfinder: **Kröck, Friedrich Wilhelm, Dr., Ackerstrasse 45, D-5068 Odenthal (DE)**
Erfinder: **Öller, Manfred, Dr., Breslauer Strasse 31, D-4150 Krefeld (DE)**
Erfinder: **Rudolph, Hans, Prof. Dr., Haydnstrasse 9, D-4150 Krefeld 1 (DE)**
Erfinder: **Renner, Otfried, Dipl.-Ing., Am Arenzberg 15, D-5090 Leverkusen 3 (DE)**
Erfinder: **Kops, Eitel-Friedrich, Dipl.-Phys., Uerdinger Strasse 339, D-4150 Krefeld (DE)**
Erfinder: **Marhold, Albrecht, Dr., Carl-Duisberg-Strasse 139, D-5090 Leverkusen 1 (DE)**

**EP 0 184 012 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, dass man dichroitische Farbstoffe in Flüssigkristallmaterialien verteilen kann, um ein schaltfähiges Anzeigeelement zu erhalten. Sowohl über die dichroitischen Farbstoffe, die Flüssigkristallmaterialien als auch das Anzeigeprinzip existiert eine umfangreiche Literatur (G.W. Gray, Dyes and Pigm. *3* (1982) 203).

In den letzten Jahren haben sich nematische flüssigkristalline Mischungen besonders durchgesetzt, die ausser bestimmten Verbindungen mit einer Cyangruppe und bestimmten Kohlenwasserstoffen auch andere Stoffklassen insbesondere Ester enthalten. Diese Mischungen sind insbesondere für den Betrieb der TN-Zellen entwickelt worden. Die Guest-Host-Zelle unterscheidet sich von der TN-Zelle prinzipiell nur dadurch, dass die in der nematischen Phase gelösten Farbstoffe die Funktion des einen äusseren Polarisators der TN-Zelle übernehmen.

Es lag daher nahe, in den für die TN-Zelle optimierten Flüssigkristallmischungen geeignete dichroitische Farbstoffe zu verteilen und so Guest-Host-Zellen zu erhalten. Die Guest-Host-Zelle erfährt aber dadurch einige Nachteile. Deren grösster ist es, dass die Farbstoffe die Flüssigkristalle beeinflussen und damit die Eigenschaften der Mischung verschlechtern. Eine besondere nachteilige Eigenschaft ist es, dass die Farbstoffe die Viskosität bei tiefen Temperaturen erhöhen können und dadurch die Schaltzeiten heraufsetzen. Diese Erhöhung kann ganz erheblich werden und die Verwendung des Displays insbesondere bei niedrigen Temperaturen unmöglich machen. Es ist also die Aufgabe, Guest-Host-Zellen bereitzustellen, die auch bei tiefen Temperaturen noch ausreichend schnell schalten.

Es wurde nun überraschend gefunden, dass die Schaltzeiten ganz erheblich verbessert werden können, wenn man den Flüssigkristallmischungen carbonylhaltige Verbindungen der Formel I zusetzt.

Die Erfindung betrifft somit farbstoffhaltige Flüssigkristallzusammensetzungen, die dadurch gekennzeichnet sind, dass sie mindestens eine Carbonylverbindung der allgemeinen Formel

$$R_1-(A_1)_m-Z_1-A_2-Z_2-(A_3)_n-R_2 \qquad (I)$$

enthalten, in der

$R_1$, $R_2$ Wasserstoff, Alkyl, das durch O- und/oder S-Atome unterbrochen und/oder substituiert sein kann, Alkoxy, das in der C-Kette durch O- und S-Atome unterbrochen und/oder substituiert sein kann, gegebenenfalls substituiertes Cycloalkyl, gegebenenfalls substituiertes Cycloalkenyl, gegebenenfalls substituiertes Cycloalkoxy, F, Cl, Br, $-CN$, $-NO_2$ und $-CF_3$,

$A_1$, $A_2$, $A_3$ 1,4-Phenylen-, 1,4-Cyclohexylen-, 1,3-Dioxan-2,5-diyl-, Piperidin-1,4-diyl-, Piperazin-1,4-diyl-, 1,4-Bicyclo-[2,2,2]-octylen- oder Pyrimidin-2,5-diyl-, 2,7-Naphthylen-Gruppen, wobei die genannten Gruppen unabhängig von der Substitution durch $R_1$, $R_2$ durch 1, 2, 3 oder 4 F-Atome und 1 oder 2 Substituenten aus der Reihe Cl, Br, $-CN$, $-CF_3$ substituiert sein können,

$Z_1$, $Z_2$ $-CO-O-$, $-O-CO-$, $-CH_2-CH_2-$, $-OCH_2-$, $-CH_2O-$, $-CH_2S-$, $-SCH_2-$, $-O-CO-O-$, $-O-CO-NH-$, $-NH-CO-O-$, $-CH_2-O-CO-NH-$, $-NH-CO-O-CH_2-$, $-NH-CO-S-CH_2-$, $-CH_2-S-CO-NH-$, $-CH_2-O-CO-$, $-NH-CO-S-$, $-S-CO-NH-$, $-CO-S-$, $-CO-SCH_2-$, $-CH_2-S-CO-$, $-S-CO-$, $-CO-O-CH_2-$, oder eine direkte Bindung, wobei mindestens eine der Gruppen $Z_1$, $Z_2$ die Gruppierung $-CO-$ enthalten muss,

n 0 oder 1 und

m 1 oder 2 bezeichnen, wobei für den Fall, dass m = 2 ist, die beiden Gruppen $A_1$ gleich oder verschieden sein können und diese Flüssigkristallzusammensetzungen mindestens einen zur Wasserstoffbrückenbindung befähigten dichroitischen Farbstoff enthalten.

Das Verhältnis von dichroitischem Farbstoff zur Carbonylverbindung soll vorzugsweise etwa äquimolar sein.

Bevorzugte Carbonylverbindungen entsprechen der Formel

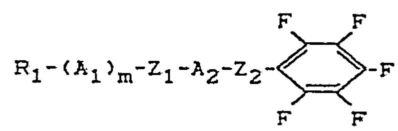 (Ia)

Alkyl bedeutet vorzugsweise $C_1$-$C_{10}$-Alkyl, das durch 1 oder 2 O- oder S-Atome unterbrochen sein kann, z.B. Methyl, Ethyl, Propyl, Butyl, Pentyl, Hexyl, Heptyl, Octyl.

Alkoxy bedeutet vorzugsweise $C_1$-$C_{10}$-Alkoxy, das in der C-Kette durch 1 oder 2 O- oder S-Atome unterbrochen sein kann, z.B. Methoxy, Ethoxy, Propoxy, Butoxy, t-Butoxy, Pentoxy, Hexoxy, Heptoxy.

Cycloalkyl bezeichnet bevorzugt $C_3$-$C_7$-Cycloalkyl, z.B. Cyclopentyl, Cyclohexyl. Cycloalkenyl bezeichnet bevorzugt $C_3$-$C_7$-Cycloalkenyl, z.B. Cyclohexenyl.

Cycloalkoxy bezeichnet bevorzugt $C_3$-$C_7$-Cycloalkoxy, z.B. Cyclohexoxy.

Bevorzugt enthalten die neuen farbstoffhaltigen Flüssigkristallzusammensetzungen folgende Gruppen von Verbindungen:

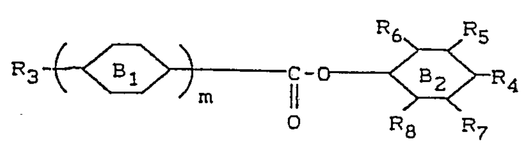 (II)

in der

$R_3$, $R_4$ Wasserstoff, Alkyl, das durch O- und S-Atome unterbrochen und/oder substituiert sein kann, Alkoxy, das in der C-Kette durch O- und/oder S-Atome unterbrochen und/oder substituiert sein kann, gegebenenfalls substituiertes Cycloalkyl, gegebenenfalls substituiertes Cycloalkenyl, gegebenenfalls substituiertes Cycloalkoxy, F, Cl, Br, $-CN$, $-NO_2$ und $-CF_3$,

$B_1$ gegebenenfalls durch F, Cl, Br, $-CN$ oder $-CF_3$ substituierte 1,4-Phenylen- oder 1,4-Cyclohexylenringe, wobei diese Substitution unabhängig von der Substitution durch $R_3$ ist,

$B_2$ Phenyl- oder 1,4-Cyclohexylringe,

$R_5$, $R_6$, $R_7$, $R_8$ Wasserstoff oder Halogen, vorzugsweise Fluor,

m' 1 oder 2 bezeichnet, wobei für den Fall, dass m' = 2 ist, die beiden Gruppen $B_1$ gleich oder verschieden sein können,

$R_3$ bezeichnet vorzugsweise $C_1$-$C_4$-Alkyl, Cyclohexyl, $-CF_3$, F, Cl, Br, $-CN$.

Besonders bevorzugt enthalten die neuen farbstoffhaltigen Flüssigkristallzusammensetzungen Verbindungen der Formel

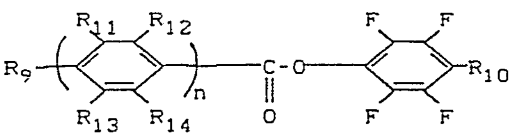 (III)

in der

$R_9$, $R_{10}$ Wasserstoff, Alkyl, das durch O- und/oder S-Atome unterbrochen und/oder substituiert sein kann, Alkoxy, das in der C-Kette durch O- und/oder S-Atome unterbrochen und/oder substituiert sein kann, gegebenenfalls substituiertes Cycloalkyl, gegebenenfalls substituiertes Cycloalkoxy, F, Cl, Br, $-CN$, $-NO_2$ und $-CF_3$,

$R_{11}$, $R_{12}$, $R_{13}$, $R_{14}$ Wasserstoff oder Halogen, vorzugsweise Fluor und

n' 1 oder 2 bezeichnet.

In Formel III bezeichnet $R_9$ vorzugsweise einen Alkyl- oder Alkoxyrest mit je 1-10 C-Atomen, der durch 1 oder 2 O-Atome unterbrochen sein kann, oder einen gegebenenfalls substituierten Cyclohexylrest.

Besonders wertvolle Komponenten der erfindungsgemässen Flüssigkristallzusammensetzungen sind solche Verbindungen der Formel III, bei denen n' = 2 ist und $R_9$ geradkettiges Alkyl mit 1-8 C-Atomen, beispielsweise Methyl, Ethyl, n-Propyl, n-Butyl, n-Pentyl, n-Hexyl, n-Heptyl oder n-Octyl bezeichnet.

Weiterhin sind die Pentafluorphenylester der Formel III mit $R_{10}$ = F von besonderer Bedeutung, bei denen $R_9$ eine Cyclohexylgruppe, die in 4-Stellung durch geradkettiges $C_1$-$C_8$-Alkyl oder geradkettiges $C_1$-$C_8$-Alkoxy substituiert sein kann, bezeichnet.

Bevorzugt sind weiterhin Verbindungen der Formel

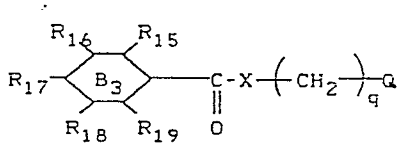 (IV)

in der

$B_3$ einen Phenyl- oder Cyclohexylring,

$R_{15}$, $R_{16}$, $R_{17}$, $R_{18}$, $R_{19}$ Wasserstoff, Alkyl, vorzugsweise $C_1$-$C_8$-Alkyl, Alkoxy, vorzugsweise $C_1$-$C_8$-Alkoxy, Cycloalkyl, vorzugsweise Cyclohexyl und Cyclopentyl, Cycloalkenyl, vorzugsweise Cyclohexenyl, Cycloalkoxy, vorzugsweise Cyclohexoxy und Cyclopentoxy, Halogen, vorzugsweise F, Cl, Br, $-CN$, $-NO_2$, $-CF_3$,

X Sauerstoff oder Schwefel,

q 0 oder 1 und

Q einen Rest der Formeln

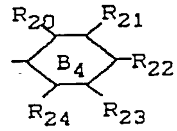 , 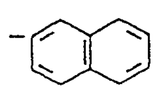 ,

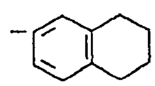 , 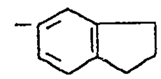

bezeichnen, wobei

$B_4$ für einen Phenyl- oder Cyclohexylring steht und

$R_{20}$, $R_{21}$, $R_{22}$, $R_{23}$, $R_{24}$ wie $R_{15}$-$R_{19}$ definiert sind.

Folgende Verbindungen der Formel IV sind besonders bevorzugt:

1. Verbindungen, bei denen 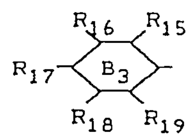 für 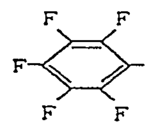 steht.

2. Verbindungen, bei denen Q für 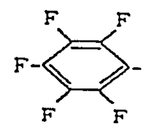 steht.

3. Verbindungen, bei denen 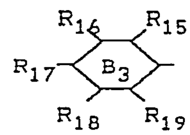 für 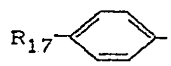 steht.

4. Verbindungen, bei denen Q für 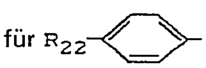 steht.

Durch Kombination der Strukturmerkmale ergeben sich ganz besonders bevorzugte Verbindungen.

Weiterhin bevorzugt sind Verbindungen der Formel

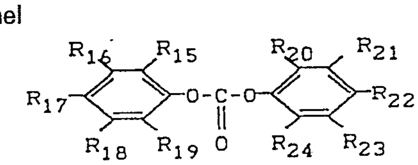 (V)

in der $R_{15}$-$R_{24}$ die zu Formel IV angegebenen Bedeutungen besitzen.

Folgende Verbindungen der Formel V sind besonders bevorzugt:

1. Verbindungen, bei denen 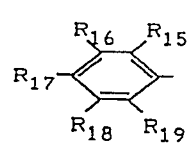 für 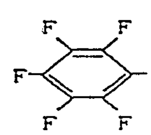 steht.

2. Verbindungen, bei denen 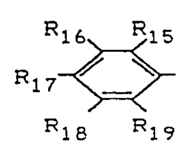 für 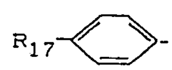 steht.

3. Verbindungen, bei denen 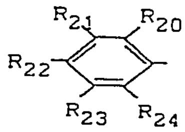

für 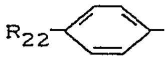 steht.

Durch Kombination von je zwei der Strukturmerkmale 1.-3. ergeben sich ganz besonders bevorzugte Verbindungen.

Weiterhin bevorzugt sind Verbindungen der Formel

$$M-\underset{\underset{O}{\|}}{C}-X-(-CH_2-)_q-Q \qquad (VI)$$

in der

M einen Rest der Formeln 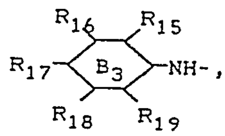 ,

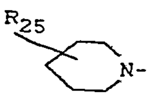 oder 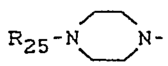 bezeichnet,

$R_{25}$ Wasserstoff oder $C_1$-$C_8$-Alkyl bedeutet und q, X, Q, $R_{15}$-$R_{19}$ und $B_3$ die zu Formel IV angegebenen Bedeutungen haben.

Folgende Verbindungen der Formel VI sind besonders bevorzugt:

1. Verbindungen, bei denen 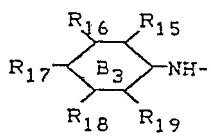

für 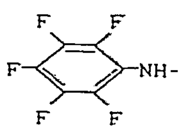 steht.

2. Verbindungen, bei denen Q

für 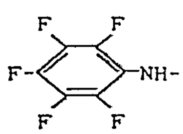 steht.

3. Verbindungen, bei denen 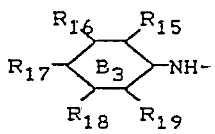

für 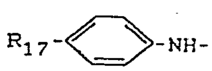 steht.

4. Verbindungen, bei den Q für 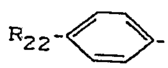 steht.

Durch Kombination der Strukturmerkmale ergeben sich besonders bevorzugte Verbindungen.

Eine weitere bevorzugte Gruppe von Verbindungen entspricht der Formel:

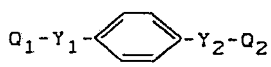 (VII)

in der $Q_1$ einen Rest der Formeln 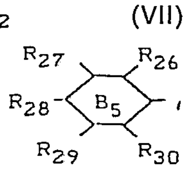 ,

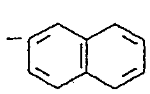 , 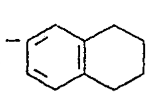 , 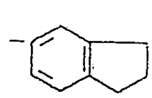

und $Q_2$ einen Rest der Formeln 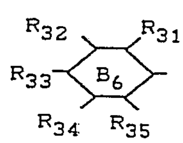 ,

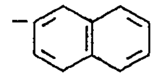 , 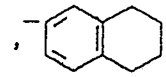 , 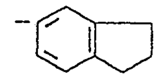

bezeichnen, wobei

$B_5$, $B_6$ für einen Phenyl- oder Cyclohexylring stehen,

$R_{26}$-$R_{35}$ Wassertstoff, Alkyl, vorzugsweise $C_1$-$C_8$-Alkyl, Alkoxy, vorzugsweise $C_1$-$C_8$-Alkoxy, Cycloalkyl, vorzugsweise Cyclohexyl und Cyclopentyl, Cycloalkenyl, vorzugsweise Cyclohexenyl, Cycloalkoxy, vorzugsweise Cyclohexoxy und Cyclopentoxy, Halogen, vorzugsweise F, Cl, Br, $-CN$, $-NO_2$ und $-CF_3$ bezeichnen,

$Y_1$ für

$$-O-\underset{\underset{O}{\|}}{C}-NH-,\ -H_2C-O-\underset{\underset{O}{\|}}{C}-NH-,\ -H_2CO-,$$

$$-O-CH_2-,\ -H_2CS-,\ -S-CH_2 \text{ und}$$

$Y_2$ für

$$-NH-\underset{\underset{O}{\|}}{C}-O-,\ -NH-\underset{\underset{O}{\|}}{C}-O-CH_2-,\ -\underset{\underset{O}{\|}}{C}-O-,$$

$$-\underset{\underset{O}{\|}}{C}-S-,\ -\underset{\underset{O}{\|}}{C}-O-CH_2- \text{ und } -\underset{\underset{O}{\|}}{C}-S-CH_2-$$

stehen.

Besonders bevorzugte Verbindungen des Typs der Formel (VII) entsprechen den folgenden Formeln:

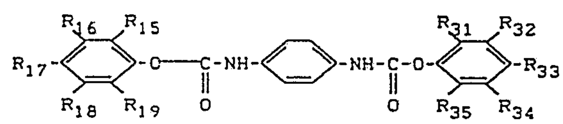

(VIII)

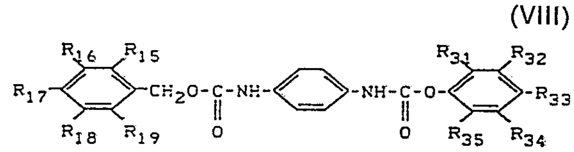

(IX)

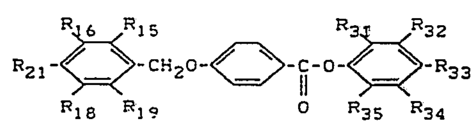 (X)

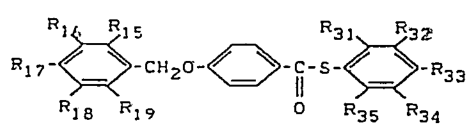 (XI)

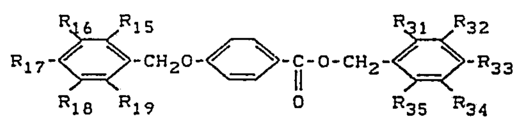 (XII)

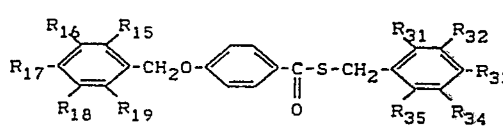 (XIII)

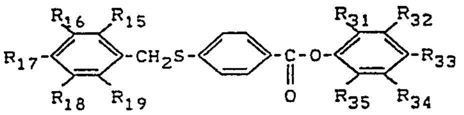

(XIV)

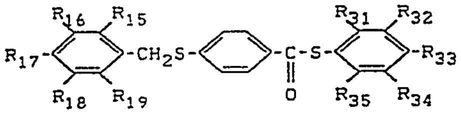

(XV)

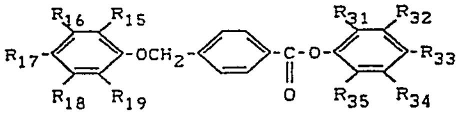

(XVI)

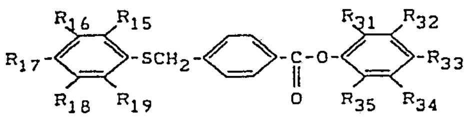

(XVII)

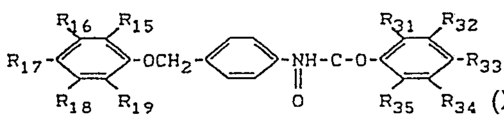

(XVIII)

Besonders bevorzugt sind folgende Verbindungen der Formeln VIII-XVIII:

1. Verbindungen, bei denen $R_{15}$, $R_{16}$, $R_{18}$, $R_{19}$ Wasserstoff bezeichnen, und $R_{17}$ = H ist.
2. Verbindungen, bei denen $R_{31}$, $R_{32}$, $R_{34}$, $R_{35}$ Wasserstoff bezeichnen, und $R_{33}$ = H ist.
3. Verbindungen, bei denen $R_{15}$-$R_{19}$ Fluor bezeichnen.
4. Verbindungen, bei denen $R_{31}$-$R_{35}$ Fluor bezeichnen.

Durch Kombination von je zwei der Strukturmerkmale 1.-4. ergeben sich ganz besonders bevorzugte Verbindungen.

Individuelle Beispiele für Verbindungen der Formel I, die bevorzugt eingesetzt werden, finden sich in den Beispielen. Weiterhin seien genannt:

Piperidin-N-carbonsäure-pentafluorphenyl-ester
Piperidin-N-carbonsäure-(4-fluor-phenyl)-ester
Piperidin-N-carbonsäure-(4-trifluor-methyl)-ester
Piperidin-N-carbonsäure-(4-cyan-phenyl)-ester
Piperidin-N-carbonsäure-(4-butyl-phenyl)-ester
Piperidin-N-carbonsäure-(4-pentyl-phenyl)-ester
N-Pentyl-piperazin-N'-carbonsäure-pentafluorphenylester
N-Pentyl-piperazin-N'-carbonsäure-(4-fluor-phenyl)-ester
N-Pentyl-piperazin-N'-carbonsäure-(4-trifluormethyl-phenyl)-ester
N-Pentyl-piperazin-N'-carbonsäure-(4-cyano-phenyl)-ester
N-Pentyl-piperazin-N'-carbonsäure-(4-butyl-phenyl)-ester
N-Pentyl-piperazin-N'-carbonsäure-(4-pentyl-phenyl)-ester
Di-pentafluorphenyl-carbonat
Di-(4-fluorphenyl)-carbonat
Di-(4-trifluormethyl-phenyl)-carbonat
Di-(4-propyl-phenyl)-carbonat
Di-(4-butyl-phenyl)-carbonat
Di-(4-pentyl-phenyl)-carbonat
Di-(4-hexyl-phenyl)-carbonat
Di-(4-heptyl-phenyl)-carbonat
Pentafluorphenyl-(4-methyl-phenyl)-carbonat
Pentafluorphenyl-(4-ethyl-phenyl)-carbonat
Pentafluorphenyl-(4-propyl-phenyl)-carbonat
Pentafluorphenyl-(4-butyl-phenyl)-carbonat
Pentafluorphenyl-(4-tert.-butyl-phenyl)-carbonat
Pentafluorphenyl-(4-pentyl-phenyl)-carbonat
Pentafluorphenyl-(4-hexyl-phenyl)-carbonat
Pentafluorphenyl-(4-heptyl-phenyl)-carbonat
Pentafluorphenyl-(4-cyclohexyl-phenyl)-carbonat
Pentafluorphenyl-(4-methoxy-phenyl)-carbonat
Pentafluorphenyl-(4-ethoxy-phenyl)-carbonat
Pentafluorphenyl-(4-butoxy-phenyl)-carbonat
Pentafluorphenyl-(4-pentoxy-phenyl)-carbonat
Pentafluorphenyl-(4-cyclohexoxy-phenyl)-carbonat
Pentafluorphenyl-(4-fluor-phenyl)-carbonat
Pentafluorphenyl-(4-cyano-phenyl)-carbonat
Pentafluorphenyl-(4-trifluormethyl-phenyl)-carbonat
Pentafluorphenyl-(4-pentoxycarbonyl-phenyl)-carbonat
(4-Fluor-phenyl)-(4-ethyl-phenyl)-carbonat
(4-Fluor-phenyl)-(4-butyl-phenyl)-carbonat
(4-Fluor-phenyl)-(4-pentyl-phenyl)-carbonat
(4-Fluor-phenyl)-(4-hexyl-phenyl)-carbonat
(4-Fluor-phenyl)-(4-cyclohexyl-phenyl)-carbonat
(4-Fluor-phenyl)-(4-methoxy-phenyl)-carbonat
(4-Fluor-phenyl)-(4-butoxy-phenyl)-carbonat
(4-Fluor-phenyl)-(4-pentoxy-phenyl)-carbonat
(4-Fluor-phenyl)-(4-cyan-phenyl)-carbonat
(4-Fluor-phenyl)-(4-trifluormethyl-phenyl)-carbonat
(4-Fluor-phenyl)-(4-pentoxycarbonyl-phenyl)-carbonat
(4-Trifluormethyl-phenyl)-(4-methyl-phenyl)-carbonat
(4-Trifluormethyl-phenyl)-(4-butyl-phenyl)-carbonat
(4-Trifluormethyl-phenyl)-(4-tert.-butyl-phenyl)-carbonat
(4-Trifluormethyl-phenyl)-(4-pentyl-phenyl)-carbonat
(4-Trifluormethyl-phenyl)-(4-heptyl-phenyl)-carbonat
(4-Trifluormethyl-phenyl)-(4-butoxy-phenyl)-carbonat
(4-Trifluormethyl-phenyl)-(4-pentoxy-phenyl)-carbonat

(4-Trifluormethyl-phenyl)-(4-cyano-phenyl)-carbonat

(4-Trifluormethyl-phenyl)-(4-pentoxycarbonyl-phenyl)-carbonat

(4-Butyl-phenyl)-(4-methyl-phenyl)-carbonat

(4-Butyl-phenyl)-(4-ethyl-phenyl)-carbonat

(4-Butyl-phenyl)-(4-propyl-phenyl)-carbonat

(4-Butyl-phenyl)-(4-tert.-butyl-phenyl)-carbonat

(4-Butyl-phenyl)-(4-pentyl-phenyl)-carbonat

(4-Butyl-phenyl)-(4-hexyl-phenyl)-carbonat

(4-Butyl-phenyl)-(4-heptyl-phenyl)-carbonat

(4-Butyl-phenyl)-(4-cyclohexyl-phenyl)-carbonat

(4-Butyl-phenyl)-(4-ethoxy-phenyl)-carbonat

(4-Butyl-phenyl)-(4-butoxy-phenyl)-carbonat

(4-Butyl-phenyl)-(4-pentoxy-phenyl)-carbonat

(4-Butyl-phenyl)-(4-cyan-phenyl)-carbonat

(4-Butyl-phenyl)-(4-pentoxycarbonyl-phenyl)-carbonat

4-(Pentafluorbenzyl-oxy)-benzoesäure-(4-pentyl-phenyl)-ester

4-(4-Cyanbenzyl-oxy)-benzoesäure-(4-butyl-phenyl)-ester

4-(4-Trifluormethyl-benzyl-oxy)-benzoesäure-(4-butyl-phenyl)-ester

4-(4-Pentyl-benzyl-oxy)-benzoesäure-(4-cyan-phenyl)-ester

4-(4-Pentyl-benzyl-oxy)-benzoesäure-pentafluorphenyl-ester

4-(Pentafluorbenzyl-oxy)-benzoesäure-pentafluorphenyl-ester

4-(Pentafluorbenzyl-oxy)-benzoesäure-(4-propyl-phenyl)-thioester

4-(Pentafluorbenzyl-oxy)-benzoesäure-pentafluorbenzyl-ester

4-(4-Pentyl-benzyl-oxy)-benzoesäure-pentafluorbenzyl-ester

4-(Pentafluorbenzyl-oxy)-benzoesäure-(4-pentyl-benzyl)-ester

4-(Pentafluorbenzyl-oxy)-benzoesäure-benzylthioester

4-(Pentafluorbenzyl-oxy)-benzoesäure-pentafluorbenzylthioester

4-(Pentafluorbenzyl-oxy)-benzoesäure-(4-hexyl-benzyl)-thioester

4-(Pentafluorbenzyl-mercapto)-benzoesäure-phenylester

4-(Pentafluorbenzyl-mercapto)-benzoesäure-benzylester

4-(Pentafluorbenzyl-mercapto)-benzoesäure-(4-pentyl-benzyl)-ester

4-(Pentafluorphenoxy-methyl)-benzoesäure-(4-ethyl-phenyl)-ester

4-(4-Cyan-phenoxy-methyl)-benzoesäure-(4-butyl-phenyl)-ester

4-(4-Butyl-phenoxy-methyl)-benzoesäure-(4-cyan-phenyl)-ester

4-(Pentafluorphenylmercapto-methyl)-benzoesäure-(4-pentyl-phenyl)-ester

4-(4-Pentyl-phenylmercapto-methyl)-benzoesäure-(4-cyan-phenyl)-ester

N-(4-(Pentafluorphenoxy-methyl)-phenyl)-carbamidsäure-phenylester

N-(4-(Pentafluorphenoxy-methyl)-phenyl)-carbamidsäure-pentafluorphenyl-ester

N-(4-(Pentafluorphenoxy-methyl)-phenyl)-carbamidsäure-(4-pentyl-phenyl)-ester

N-(4-(4-Pentyl-phenoxy-methyl)-phenyl)-carbamidsäure-(4-pentyl-phenyl)-ester

N-(4-(4-Pentyl-phenylmercapto-methyl)-phenyl)-carbamidsäure-(4-pentyl-phenyl)-ester.

Verbindungen der Formel I sind zum Teil als Komponenten flüssigkristalliner Zusammensetzungen bekannt. Insbesondere Carbonsäureester werden eingesetzt, um die Klärpunkte nematischer FK-Mischungen zu erhöhen. Andererseits induzieren diese bei niedrigen Temperaturen smektische Phasen, was zu unerwünschter Heraufsetzung der Viskosität und dann zu verlangsamten Schaltzeiten führt.

Es ist daher überraschend, dass diese Carbonylverbindungen, insbesondere mehrfach fluorierte Ester, in Gegenwart von dichroitischen Farbstoffen die Schaltgeschwindigkeiten bei tiefen Temperaturen verbessern.

Diese Eigenschaft ist allerdings nur dann zu beobachten, wenn der Farbstoff über Gruppen verfügt, die H-Brücken zum Carbonylsauerstoff bilden können. Hierfür kommen insbesondere Hydroxylgruppen in Frage oder Amin-Substituenten, die sich von primären oder sekundären Aminen ableiten lassen.

Flüssigkristallzusammensetzungen, welche dichroitische Farbstoffe enthalten, sind literaturbekannt. Die erfindungsgemässen farbstoffhaltigen Flüssigkristallzusammensetzungen enthalten insbesondere dichroitische Azo- und besonders bevorzugt dichroitische Anthrachinonfarbstoffe.

Anthrachinonfarbstoffhaltige Flüssigkristallzusammensetzungen, die erfindungsgemäss durch den Zusatz einer Verbindung der Formel I verbessert werden können, sind beispielsweise aus EP 26 004, DE-OS 2 920 730, DE-OS 3 036 853, EP 67 354 und DE-OS 2 631 428 bekannt.

Bevorzugt enthalten die neuen Flüssigkristallzusammensetzungen Farbstoffe der Formel

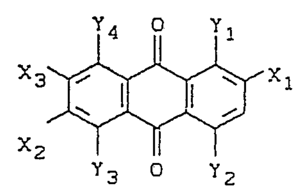

$Y_1, Y_2, Y_3, Y_4$ Wasserstoff, Halogen, Nitro, Amino, Alkylamino, Arylamino, Acylamino, Cycloalkylamino, Aralkylamino, Alkoxy, Cycloalkoxy, Aryloxy, Aralkoxy, Alkylthio, Cycloalkylthio, Arylthio, Aralkylthio, Hydroxy oder Mercapto, wobei die genannten Kohlenwasserstoffreste substituiert oder annelliert sein können, mit der Massgabe, dass mindestens einer der Substituenten $Y_1$-$Y_4$ eine zur Brückenbildung befähigte Gruppe sein muss,

$X_1$, $X_2$, $X_3$ Wasserstoff, Halogen $-T_1$, $-OT_1$, $-ST_1$, $-CN$, $-CF_3$, $-COZT_1$, $-CH{=}N-T_1$,
Z $-O-$ oder $-NH-$,
$T_1$ gegebenenfalls substituiertes Alkyl, wobei die Alkylkette durch ein O-Atom oder mehrere nicht nachbarständige O-Atome unterbrochen sein kann, vorzugsweise $C_1$-$C_{10}$-Alkyl, das durch 1 oder 2 O-Atome unterbrochen sein kann, gegebenenfalls substituiertes oder annelliertes Aryl, gegebenenfalls substituiertes Cycloalkyl, gegebenenfalls substituiertes Aralkyl oder einen gegebenenfalls substituierten heterocyclischen Rest bezeichnen.

Azofarbstoffhaltige Flüssigkristallzusammensetzungen, die erfindungsgemäss durch den Zusatz einer Verbindung der Formel I verbessert werden können, sind z.B. aus US-PS 4 128 497, US-PS 4 122 027, EP-A1 87 248, EP-A1 80 153, EP-A1 67 354, GB 2090274 und DE-OS 2 631 428 bekannt.

Flüssigkristalline, nematische Materialien sind in vielfältiger Zusammensetzung bekannt. Zur Erzeugung guter Eigenschaften bei tiefen Temperaturen werden überwiegend Verbindungen unpolaren Charakters eingesetzt.

Die Bestimmung des polaren Charakters einer Komponente ist häufig schwierig: zudem kommt es bei den komplexen Mischungen mit sehr unterschiedlichen Verbindungen auf die quantitative Zusammensetzung an. So sind die Kohlenwasserstoffe immer zu den unpolaren, die durch Cyan substituierten Substanzen zu den polaren Substanzen zu rechnen, während die Ether eine Zwischenposition einnehmen. Ein Gehalt an Kohlenwasserstoffverbindungen von wenigstens 15% ist notwending, um den erfindungsgemässen Effekt sichtbar werden zu lassen. Die Verwendung von FK-Mischungen, die mehr als 20% Kohlenwasserstoffverbindungen enthalten, ist besonders bevorzugt.

Die Schaltgeschwindigkeit ist von verschiedenen Faktoren abhängig, die gut bekannt sind (B. Bahadur, Mol. Cryst. Liq. Cryst., *109*, 46 ff (1984)). Man unterteilt gewöhnlich die Gesamtzeit in eine Totzeit, die zwischen dem Anlegen einer Spannung und dem Beginn der Transmissionsänderung liegt, eine Anstiegszeit, die verstreicht, wenn sich die Transmission von 10 auf 90% des Maximalwerts ändert und die Abklingzeit, die benötigt wird, um von 90% maximaler Transmission zu 10% zurückzukehren. Für die Schaltgeschwindigkeit ist die Abklingzeit die entscheidende Grösse. Sie hängt sehr von der Schichtdicke ab, weswegen man nur Werte vergleichen kann, die bei gleicher Schichtdicke gemessen wurden, oder was der Praxis eher entspricht, die auf eine einheitliche Schichtdicke umgerechnet werden.

Die Versuche wurden mit einer Spannung von 10 V/1000 Hz durchgeführt und als Normabstand 10 µm festgelegt. Diese Messwertung entspricht der publizierten Praxis.

Der Abstand der beiden Innenflächen lässt sich durch Interferenzmessungen einfach bestimmen.

Die Verbindungen der Formel I sind grösstenteils literaturbekannt. Ihre Herstellung erfolgt nach oder in Analogie zu den literaturbekannten Verfahren.

Die Verbindungen der Formel Ia sind neu und ebenfalls Gegenstand der vorliegenden Erfindung. Die Herstellung der Carbonsäureester erfolgt nach den im Prinzip bekannten Methoden, wie sie z.B. in Houben-Weyl-Müller (4. Aufl., Bd. 8, S. 516 ff, G. Thieme Verlag, Stuttgart, 1952) beschrieben sind.

Besonders bei der Herstellung der Pentafluorbenzoesäure-Derivate hat es sich bewährt, das Carbonsäurehalogenid und die phenolische Komponente in Dimethylformamid, in Gegenwart von Alkali- oder Erdalkalimetallfluoriden, vorzugsweise Kaliumfluorid, analog zu Angaben in der EP 82 712 umzusetzen.

Die Herstellung der Carbamidsäureester erfolgt ebenfalls nach den bekannten Methoden (vgl. z.B. Houben-Weyl-Müller, 4. Aufl., Bd. 8, S. 137 ff, G. Thieme Verlag, Stuttgart, 1952); als in vielen Fällen besonders geeignet erwiesen hat sich die Addition von Alkoholen oder Phenolen an Arylisocyanate, die vor allem bei den Phenolen durch tert. Amine, wie z.B. Triethylamin, 1,4-Diaza-bicyclo-[2,2,2]octan, 1,5-Diaza-bicyclo[4,3,0]non-5-en, 1,8-Diaza-bicyclo[5,4,0]undec-7-en katalysiert werden muss. Eine andere Methode, die vor allem zur Herstellung der am Stickstoff zweifach substituierten Carbamidsäureester geeignet ist, besteht in der Aminierung der entsprechenden Chlorameisensäureester.

Auch die Carbonate werden nach bekannten Methoden erhalten (vgl. Houben-Weyl-Müller, 4. Aufl., Bd. 8, S. 105 ff, G. Thieme Verlag, Stuttgart, 1952).

Die Herstellung der Benzylether und -thioether erfolgte entsprechend den Angaben in Houben-Weyl-Müller, 4. Aufl., Bd. 6/3, S. 11 ff, G. Thieme Verlag, Stuttgart, 1965.

Die Darstellung der Verbindungen der Formel III kann beispielsweise in der Weise erfolgen, dass man eine Verbindung der Formel

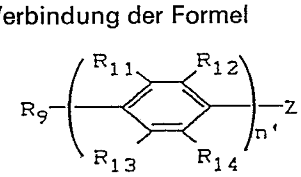

(IIIa)

wobei

$R_9$, $R_{11}$-$R_{14}$ und n' die zu Formel III angegebenen Bedeutungen haben und Z $-COOH$ oder ein reaktionsfähiges Derivat der Carboxylgruppe bezeichnet, mit Pentafluorphenol umsetzt.

Die Umsetzung erfolgt vorzugsweise bei einer Temperatur zwischen $-20°$ C und $+150°$ C, gegebenenfalls in Gegenwart eines organischen Lösungsmittels und/oder eines üblichen Veresterungskatalysators. Ansonsten werden die Reaktionsbedingungen weitgehend von der Natur der Gruppe Z bestimmt. So wird eine Carbonsäure der Formel IIIa (Z=COOH) mit Pentafluorphenol in der Regel in Gegenwart einer starken Säure, beispielsweise einer Mineralsäure wie Salzsäure oder Schwefelsäure umgesetzt.

Eine bevorzugte Reaktionsweise ist die Umsetzung insbesondere eines Säurechlorids der For-

mel IIIa (Z=COCl) oder eines Säurefluorids IIIa (Z=COF) mit Pentafluorphenol. Vorzugsweise werden diese Veresterungsreaktion im basischen Milieu durchgeführt, wobei als Basen insbesondere Alkalimetallhydroxide wie Natrium- oder Kaliumhydroxid, Alkalimetallcarbonate bzw. -hydrogencarbonate, Alkalimetallacetate, Erdalkalimetallhydroxide wie Calciumhydroxid oder organische Basen wie Triethylamin oder Pyridin eingesetzt werden.

Die Veresterungen werden vorteilhaft in Gegenwart eines inerten Lösungsmittels durchgeführt. Gut geeignet sind insbesondere Ether wie Diethylether, Di-i-propylether oder Dioxan, Kohlenwasserstoffe wie Benzol, Toluol oder Xylol und Halogenkohlenwasserstoffe wie Chloroform oder Methylenchlorid. Mit Wasser nicht mischbare Lösungsmittel können gleichzeitig vorteilhaft zum azeotropen Abdestillieren des Reaktionswassers verwendet werden. Prinzipiell können die Veresterungsreaktionen auch ohne Lösungsmittel, z.B. durch einfaches Erhitzen der Komponenten in Gegenwart von Natriumacetat, durchgeführt werden.

Die Verbindungen der Formel I werden den Flüssigkristallzusammensetzungen gegebenenfalls in Mischung mit einem oder mehreren Farbstoffen, zweckmässig in Mengen von 0,5 bis 1,5 mol pro mol Farbstoff zugesetzt. Besonders vorteilhaft sind Zusätze von 1 mol pro mol Farbstoff. Aus dieser Beziehung von Farbstoff und carbonylhaltiger Verbindung ergibt sich der Gehalt an der Gesamtmischung. Er ist abhängig von der Menge des eingesetzten Farbstoffs und dem Molgewicht des Additivs. Gemeinhin beträgt die Farbstoffmenge in einer nematischen Guest-Host-Mischung weniger als 10%. Durch den Zusatz einer oder mehrerer Verbindungen der Formel I zu flüssigkristallinen Verbindungen lassen sich mit dieser Mischung betriebene Displays, beruhend z.B. auf dem Guest-Host-Effekt, auch bei tiefen Temperaturen überraschenderweise erheblich günstigere Schaltzeiten erreichen als ohne Zusatz. Damit werden viele flüssigkristalline Substanzen und Gemische, deren Einsatz wegen zu langer Schaltzeiten nur zum Gebrauch bei Zimmertemperatur möglich war, auch bei tieferen Temperaturen und damit unter freiem Himmel technisch in grösserem Ausmass verwendbar.

Die folgenden Beispiele sollen die Erfindung erläutern, ohne sie zu begrenzen.

*Beispiel 1*

50,0 g (0,2 M) 4-n-Octyloxybenzoesäure und 47,6 g (0,4 M) Thionylchlorid werden bis zur Beendigung der Gasentwicklung am Rückfluss erhitzt. Nach Abdestillieren des überschüssigen Thionylchlorids bei Normaldruck wird im Hochvakuum destilliert. Man erhält 51,6 g (93%) 4-n-Octyloxybenzoesäurechlorid mit Siedepunkt 170° C/0,7 mm.

8,7 g (0,032 M) 4-n-Octyloxybenzoesäurechlorid werden mit 5,0 g (0,027 M) Pentafluorphenol in 50 ml Pyridin über Nacht bei Raumtemperatur stehengelassen. Dann wird auf Wasser gegossen, 3 × mit Ether extrahiert, und die vereinigten organischen Phasen werden mehrmals mit verdünnter Salzsäure ausgeschüttelt. Nach Trocknen über Natriumsulfat und Abdampfen des Lösungsmittels werden 9,70 g (86%) 4-n-Octyloxybenzoesäurepentafluorphenylester mit dem Schmelzpunkt 44-45° C erhalten.

Analog werden dargestellt:

4-Ethylbenzoesäurepentafluorphenylester
4-Propylbenzoesäurepentafluorphenylester
4-Butylbenzoesäurepentafluorphenylester
4-Pentylbenzoesäurepentafluorphenylester
4-Heptylbenzoesäurepentafluorphenylester
4-(4-Propylcyclohexyl)-benzoesäurepentafluorphenylester
4-(4-Pentylcyclohexyl)-benzoesäurepentafluorphenylester
4-Ethoxybenzoesäurepentafluorphenylester
4-Butoxybenzoesäurepentafluorphenylester
4-Hexoxybenzoesäurepentafluorphenylester
Pentafluorbenzoesäure-pentafluor-phenylester
Pentafluorbenzoesäure-phenylester
Pentafluorbenzoesäure-4-methyl-phenylester
Pentafluorbenzoesäure-4-ethyl-phenylester
Pentafluorbenzoesäure-4-propyl-phenylester
Pentafluorbenzoesäure-4-butyl-phenylester
Pentafluorbenzoesäure-4-pentyl-phenylester
Pentafluorbenzoesäure-4-hexyl-phenylester
Pentafluorbenzoesäure-4-heptyl-phenylester
Pentafluorbenzoesäure-4-octyl-phenylester
Pentafluorbenzoesäure-4-methoxy-phenylester
Pentafluorbenzoesäure-4-ethoxy-phenylester
Pentafluorbenzoesäure-4-propoxy-phenylester
Pentafluorbenzoesäure-4-butoxy-phenylester
Pentafluorbenzoesäure-4-tert.-butoxy-phenylester
Pentafluorbenzoesäure-4-pentoxy-phenylester
Pentafluorbenzoesäure-4-hexoxy-phenylester
Pentafluorbenzoesäure-4-heptoxy-phenylester
Pentafluorbenzoesäure-4-cyclopentyl-phenylester
Pentafluorbenzoesäure-4-cyclohexyl-phenylester
Pentafluorbenzoesäure-4-cyclohexenyl-phenylester
Pentafluorbenzoesäure-4-cyclohexoxy-phenylester
Pentafluorbenzoesäure-3,5-difluor-phenylester
4-Fluorbenzoesäure-phenylester
4-Fluorbenzoesäure-4-methyl-phenylester
4-Fluorbenzoesäure-4-ethyl-phenylester
4-Fluorbenzoesäure-4-propyl-phenylester
4-Fluorbenzoesäure-4-butyl-phenylester
4-Fluorbenzoesäure-4-pentyl-phenylester
4-Fluorbenzoesäure-4-heptyl-phenylester
4-Fluorbenzoesäure-4-methoxy-phenylester
4-Fluorbenzoesäure-4-butoxy-phenylester
4-Fluorbenzoesäure-4-pentoxy-phenylester
4-Fluorbenzoesäure-4-heptoxy-phenylester
4-Fluorbenzoesäure-4-cyclohexyl-phenylester
4-Fluorbenzoesäure-4-cyclohexoxy-phenylester

4-Trifluormethyl-benzoesäure-4-methyl-phenylester
4-Trifluormethyl-benzoesäure-4-ethyl-phenylester
4-Trifluormethyl-benzoesäure-4-butyl-phenylester
4-Trifluormethyl-benzoesäure-4-pentyl-phenylester
4-Trifluormethyl-benzoesäure-4-heptyl-phenylester
4-Trifluormethyl-benzoesäure-4-pentoxy-phenylester
4-Trifluormethyl-benzoesäure-4-fluor-phenylester
4-Trifluormethyl-benzoesäure-4-cyclohexenyl-phenylester
4-Trifluormethyl-hexahydrobenzoesäure-4-pentoxy-phenylester
2,3-Dichlor-4-trifluormethyl-benzoesäure-4-pentyl-phenylester
Pentafluorbenzoesäure-pentafluor-benzylester
Benzoesäure-pentafluorbenzylester
4-Methyl-benzoesäure-pentafluorbenzylester
4-Ethyl-benzoesäure-pentafluorbenzylester
4-Butyl-benzoesäure-pentafluorbenzylester
4-Pentyl-benzoesäure-pentafluorbenzylester
4-Hexyl-benzoesäure-pentafluorbenzylester
4-Heptyl-benzoesäure-pentafluorbenzylester
4-Pentyl-hexahydrobenzoesäure-pentafluorbenzylester
4-Methoxy-benzoesäure-pentafluorbenzylester
4-Ethoxy-benzoesäure-pentafluorbenzylester
4-Propoxy-benzoesäure-pentafluorbenzylester
4-Butoxy-benzoesäure-pentafluorbenzylester
4-Pentyl-benzoesäure-pentafluorbenzylester
4-Cyclohexyl-benzoesäure-pentafluorbenzylester
4-Cyclohexoxy-benzoesäure-pentafluorbenzylester
4-Fluorbenzoesäure-pentafluorbenzylester
3-Trifluormethyl-benzoesäure-pentafluorbenzylester
4-Trifluormethyl-benzoesäure-pentafluorbenzylester
4-Chlorbenzoesäure-pentafluorbenzylester
4-Pentyl-benzoesäure-4-methoxy-2,3,5,6-tetrafluor-benzylester
4-Cyclohexyl-benzoesäure-4-methoxy-2,3,5,6-tetrafluorbenzylester
Pentafluorbenzoesäure-benzylester
4-Fluorbenzoesäure-benzylester
4-Trifluormethyl-benzoesäure-benzylester
4-Trifluormethyl-benzoesäure-4-fluorbenzylester
4-Benzoyloxy-benzoesäure-pentylester
4-Pentafluorbenzoyloxy-benzoesäure-methylester
4-Pentafluorbenzoyloxy-benzoesäure-ethylester
4-Pentafluorbenzoyloxy-benzoesäure-butylester
4-Pentafluorbenzoyloxy-benzoesäure-pentylester
4-Pentafluorbenzoyloxy-benzoesäure-hexylester
4-Pentafluorbenzoyloxy-benzoesäure-heptylester
4-Pentafluorbenzoyloxy-benzoesäure-cyclohexylester
4-Benzoyloxy-benzoesäure-methylester
4-Benzoyloxy-benzoesäure-ethylester
4-Benzoyloxy-benzoesäure-butylester
4-Benzoyloxy-benzoesäure-octylester
4-Benzoyloxy-benzoesäure-hexylester
4-Benzoyloxy-benzoesäure-heptylester
4-(4-Fluorbenzoyloxy)-benzoesäure-methylester
4-(4-Fluorbenzoyloxy)-benzoesäure-propylester
4-(4-Fluorbenzoyloxy)-benzoesäure-pentylester
4-(4-Fluorbenzoyloxy)-benzoesäure-hexylester
4-(4-Fluorbenzoyloxy)-benzoesäure-octylester
4-(3-Trifluormethyl-benzoyloxy)-benzoesäure-heptylester
4-(4-Trifluormethyl-benzoyloxy)-benzoesäure-methylester
4-(4-Trifluormethyl-benzoyloxy)-benzoesäure-ethylester
4-(4-Trifluormethyl-benzoyloxy)-benzoesäure-butylester
4-(4-Trifluormethyl-benzoyloxy)-benzoesäure-pentylester
4-(4-Trifluormethyl-benzoyloxy)-benzoesäure-heptylester
4-(4-Chlor-benzoyloxy)-benzoesäure-methylester
4-(4-Chlor-benzoyloxy)-benzoesäure-ethylester
4-(4-Chlor-benzoyloxy)-benzoesäure-pentylester
4-(4-Chlor-benzoyloxy)-benzoesäure-heptylester
4-(4-Pentyl-benzoyloxy)-benzoesäure-methylester
4-(4-Pentyl-benzoyloxy)-benzoesäure-ethylester
4-(4-Pentyl-benzoyloxy)-benzoesäure-butylester
4-(4-Pentyl-benzoyloxy)-benzoesäure-pentylester
4-(4-Pentyl-benzoyloxy)-benzoesäure-hexylester
4-(4-Pentyl-benzoyloxy)-benzoesäure-heptylester
4-Pentylbenzoesäure-4-cyan-thiophenylester
4-Methylbenzoesäure-4-nitro-thiophenylester
4-Methylbenzoesäure-4-fluor-thiophenylester
4-Methylbenzoesäure-4-brom-thiophenylester
4-Methylbenzoesäure-4-cyan-thiophenylester
4-Methylbenzoesäure-4-trifluormethyl-thiophenylester
4-Methylbenzoesäure-pentafluor-thiophenylester
4-Ethylbenzoesäure-4-fluor-thiophenylester
4-Ethylbenzoesäure-4-brom-thiophenylester

4-Ethylbenzoesäure-4-cyan-thiophenylester
4-Ethylbenzoesäure-4-trifluormethyl-thiophenylester
4-Ethylbenzoesäure-pentafluor-thiophenylester
4-Butylbenzoesäure-4-nitro-thiophenylester
4-Butylbenzoesäure-4-fluor-thiophenylester
4-Butylbenzoesäure-4-brom-thiophenylester
4-Butylbenzoesäure-4-cyan-thiophenylester
4-Butylbenzoesäure-4-trifluormethyl-thiophenylester
4-Butylbenzoesäure-pentafluor-thiophenylester
4-Pentylbenzoesäure-4-nitro-thiophenylester
4-Pentylbenzoesäure-4-fluor-thiophenylester
4-Pentylbenzoesäure-4-brom-thiophenylester
4-Pentylbenzoesäure-4-trifluormethyl-thiophenylester
4-Pentylbenzoesäure-pentafluor-thiophenylester
4-Heptylbenzoesäure-4-nitro-thiophenylester
4-Heptylbenzoesäure-4-cyan-thiophenylester
4-Heptylbenzoesäure-4-fluor-thiophenylester
4-Heptylbenzoesäure-4-brom-thiophenylester
4-Heptylbenzoesäure-4-trifluormethyl-thiophenylester
4-Heptylbenzoesäure-pentafluor-thiophenylester
4-Heptylbenzoesäure-4-butyl-thiophenylester
4-Pentyloxy-benzoesäure-4-cyan-phenylester
Pentafluorbenzoesäure-4-cyan-phenylester
Pentafluorbenzoesäure-4-nitro-thiophenylester
Pentafluorbenzoesäure-4-fluor-thiophenylester
Pentafluorbenzoesäure-4-brom-thiophenylester
Pentafluorbenzoesäure-4-trifluormethyl-thiophenylester
Pentafluorbenzoesäure-pentafluor-thiophenylester
Pentafluorbenzoesäure-4-methyl-thiophenylester
Pentafluorbenzoesäure-4-ethyl-thiophenylester
Pentafluorbenzoesäure-4-propyl-thiophenylester
Pentafluorbenzoesäure-4-butyl-thiophenylester
Pentafluorbenzoesäure-4-pentyl-thiophenylester
Pentafluorbenzoesäure-4-hexyl-thiophenylester
Pentafluorbenzoesäure-4-heptyl-thiophenylester
Pentafluorbenzoesäure-2-thionaphthylester
Pentafluorbenzoesäure-2-(5,6,7,8-tetrahydro-thionaphthyl)-ester
Pentafluorbenzoesäure-5-thioindanylester
4-Trifluormethyl-benzoesäure-thiophenylester
4-Trifluormethyl-benzoesäure-4-methyl-thiophenylester
4-Trifluormethyl-benzoesäure-4-ethyl-thiophenylester
4-Trifluormethyl-benzoesäure-4-propyl-thiophenylester
4-Trifluormethyl-benzoesäure-4-butyl-thiophenylester
4-Trifluormethyl-benzoesäure-4-pentyl-thiophenylester
4-Trifluormethyl-benzoesäure-4-heptyl-thiophenylester
4-Trifluormethyl-benzoesäure-2-(5,6,7,8-tetrahydro-thionaphthyl)-ester
4-Trifluormethyl-hexahydrobenzoesäure-4-pentyl-thiophenylester

*Beispiel 2*

a) 67 g (0,25 M) 4-(4-n-Pentylphenyl)-benzoesäure und 60 g (0,5 M) Thionylchlorid werden bis zur Beendigung der Gasentwicklung zum Rückfluss erhitzt. Nach Abdestillieren der flüchtigen Bestandteile bei Normaldruck wird im Hochvakuum destilliert und 60,3 g (84%) 4-(4-n-Pentylphenyl)-benzoesäurechlorid mit Siedepunkt 162-165° C/0,2 mm werden erhalten.

b) 8,6 g (0,03 M) 4-(4-n-Pentylphenyl)-benzoesäurechlorid und 5,9 g (0,03 M) Pentafluorphenol werden bei Raumtemperatur über Nacht gerührt. Danach wird auf Wasser gegossen, 3 × mit Ether extrahiert, und die vereinigten organischen Phasen werden mehrmals mit verdünnter Salzsäure, anschliessend mit Natriumhydrogencarbonatlösung gewaschen. Nach Abdampfen des Lösungsmittels am Rotavapor werden 6,7 g (52%) 4-(4-n-Pentylphenyl)-benzoesäurepentafluorphenylester mit Schmelzpunkt 62° C (Ethanol) und Klärpunkt 78° C erhalten.

Analog werden dargestellt:

4-(4-Ethylphenyl)-benzoesäure-pentafluorphenylester
4-(4-Propylphenyl)-benzoesäure-pentafluorphenylester
4-(4-Butylphenyl)-benzoesäure-pentafluorphenylester
4-(4-Hexylphenyl)-benzoesäure-pentafluorphenylester
4-(4-Heptylphenyl)-benzoesäure-pentafluorphenylester
4-(4-Ethoxyphenyl)-benzoesäure-pentafluorphenylester
4-(4-Butoxyphenyl)-benzoesäure-pentafluorphenylester

*Beispiel 3*

*N-(4-Ethoxy-phenyl)-carbamidsäure-4-pentylphenylester*

In eine Lösung aus 3,6 g 4-Pentylphenol und 0,5 $cm^3$ Triethylamin in 15 $cm^3$ trockenem Toluol tropft man bei Raumtemperatur eine Lösung aus 2,9 g 4-Ethoxy-phenyl-isocyanat in 15 $cm^3$ Toluol ein. Nach Abklingen der Reaktion rührt man noch 2 Stunden bei Raumtemperatur, dampft dann die Lösung ein und kristallisiert den Rückstand aus Ethanol um. Man erhält 4,0 g farblose Kristalle vom Schmelzpunkt 148° C, die laut Hochdruck-Flüssig-Chromatogramm (HPLC) 98,5%ig sind.

Ganz entsprechend werden auch die folgenden Carbamidsäurephenylester hergestellt:

N-Phenyl-carbamidsäure-4-methyl-phenylester
N-Phenyl-carbamidsäure-4-ethyl-phenylester
N-Phenyl-carbamidsäure-4-butyl-phenylester
N-Phenyl-carbamidsäure-4-pentyl-phenylester
N-Phenyl-carbamidsäure-4-heptyl-phenylester
N-Phenyl-carbamidsäure-4-cyclohexyl-phenylester
N-Phenyl-carbamidsäure-4-butoxy-phenylester
N-Phenyl-carbamidsäure-4-pentoxy-phenylester
N-Phenyl-carbamidsäure-2-(5,6,7,8-tetrahydronaphthyl)-ester
N-Phenyl-carbamidsäure-4-fluor-phenylester
N-Phenyl-carbamidsäure-4-cyan-phenylester
N-Phenyl-carbamidsäure-4-trifluormethyl-phenylester
N-Phenyl-carbamidsäure-4-pentafluorphenylester
N-Phenyl-carbamidsäure-4-pentafluorbenzylester
N-Phenyl-carbamidsäure-4-cyan-thiophenylester
N-(4-Methyl-phenyl)-carbamidsäure-4-methyl-phenylester
N-(4-Methyl-phenyl)-carbamidsäure-4-butyl-phenylester
N-(4-Methyl-phenyl)-carbamidsäure-4-pentyl-phenylester
N-(4-Methyl-phenyl)-carbamidsäure-4-heptyl-phenylester
N-(4-Methyl-phenyl)-carbamidsäure-4-cyclohexyl-phenylester
N-(4-Methyl-phenyl)-carbamidsäure-4-butoxy-phenylester
N-(4-Methyl-phenyl)-carbamidsäure-4-pentoxy-phenylester
N-(4-Methyl-phenyl)-carbamidsäure-2-(5,6,7,8-tetrahydronaphthyl)-ester
N-(4-Methyl-phenyl)-carbamidsäure-4-fluor-phenylester
N-(4-Methyl-phenyl)-carbamidsäure-4-cyan-phenylester
N-(4-Methyl-phenyl)-carbamidsäure-4-trifluormethyl-phenylester
N-(4-Methyl-phenyl)-carbamidsäure-pentafluorphenylester
N-(4-Methyl-phenyl)-carbamidsäure-pentafluorbenzylester
N-(4-Butyl-phenyl)-carbamidsäure-phenylester
N-(4-Butyl-phenyl)-carbamidsäure-4-ethyl-phenylester
N-(4-Butyl-phenyl)-carbamidsäure-4-butyl-phenylester
N-(4-Butyl-phenyl)-carbamidsäure-4-hexyl-phenylester
N-(4-Butyl-phenyl)-carbamidsäure-4-heptyl-phenylester
N-(4-Butyl-phenyl)-carbamidsäure-4-cyclohexyl-phenylester
N-(4-Butyl-phenyl)-carbamidsäure-4-butoxy-phenylester
N-(4-Butyl-phenyl)-carbamidsäure-4-pentoxy-phenylester
N-(4-Butyl-phenyl)-carbamidsäure-4-cyclohexoxy-phenylester
N-(4-Butyl-phenyl)-carbamidsäure-2-naph-thylester
N-(4-Butyl-phenyl)-carbamidsäure-4-fluor-phenylester
N-(4-Butyl-phenyl)-carbamidsäure-4-brom-phenylester
N-(4-Butyl-phenyl)-carbamidsäure-4-cyan-phenylester
N-(4-Butyl-phenyl)-carbamidsäure-4-trifluor-methyl-phenylester
N-(4-Butyl-phenyl)-carbamidsäure-pentafluorphenylester
N-(4-Methyl-phenyl)-carbamidsäure-pentafluorbenzylester
N-(4-Butyl-phenyl)-carbamidsäure-4-cyan-thiophenylester
N-(4-Ethoxy-phenyl)-carbamidsäure-phenylester
N-(4-Ethoxy-phenyl)-carbamidsäure-4-methyl-phenylester
N-(4-Ethoxy-phenyl)-carbamidsäure-4-ethyl-phenylester
N-(4-Ethoxy-phenyl)-carbamidsäure-4-propyl-phenylester
N-(4-Ethoxy-phenyl)-carbamidsäure-4-butyl-phenylester
N-(4-Ethoxy-phenyl)-carbamidsäure-4-pentyl-phenylester
N-(4-Ethoxy-phenyl)-carbamidsäure-4-hexyl-phenylester
N-(4-Ethoxy-phenyl)-carbamidsäure-4-heptyl-phenylester
N-(4-Ethoxy-phenyl)-carbamidsäure-4-cyclohexyl-phenylester
N-(4-Ethoxy-phenyl)-carbamidsäure-4-methoxy-phenylester
N-(4-Ethoxy-phenyl)-carbamidsäure-4-butoxy-phenylester
N-(4-Ethoxy-phenyl)-carbamidsäure-4-pentoxy-phenylester
N-(4-Ethoxy-phenyl)-carbamidsäure-4-cyclohexoxy-phenylester
N-(4-Ethoxy-phenyl)-carbamidsäure-2-naph-thylester
N-(4-Ethoxy-phenyl)-carbamidsäure-2-(5,6,7,8-tetrahydronaphthyl)-ester
N-(4-Ethoxy-phenyl)-carbamidsäure-4-fluor-phenylester
N-(4-Ethoxy-phenyl)-carbamidsäure-4-brom-phenylester
N-(4-Ethoxy-phenyl)-carbamidsäure-4-cyan-phenylester
N-(4-Ethoxy-phenyl)-carbamidsäure-4-trifluor-methyl-phenylester
N-(4-Ethoxy-phenyl)-carbamidsäure-pentafluor-phenylester
N-(4-Ethoxy-phenyl)-carbamidsäure-pentafluor-phenylester

N-(4-Ethoxy-phenyl)-carbamidsäure-4-cyan-thiophenylester

N-(3-Chlor-4-trifluormethyl-phenyl)-carbamidsäure-phenylester

N-(4-Trifluormethyl-phenyl)-carbamidsäure-4-methyl-phenylester

N-(3-Chlor-4-trifluormethyl-phenyl)-carbamidsäure-4-ethylphenylester

N-(4-Trifluormethyl-phenyl)-carbamidsäure-4-propyl-phenylester

N-(4-Trifluormethyl-phenyl)-carbamidsäure-4-butyl-phenylester

N-(4-Trifluormethyl-phenyl)-carbamidsäure-4-pentyl-phenylester

N-(3-Chlor-4-trifluormethyl-phenyl)-carbamidsäure-4-hexyl-phenylester

N-(3-Chlor-4-trifluormethyl-phenyl)-carbamidsäure-4-heptyl-phenylester

N-(4-Trifluormethyl-phenyl)-carbamidsäure-4-cyclohexyl-phenylester

N-(4-Trifluormethyl-phenyl)-carbamidsäure-4-methoxy-phenylester

N-(3-Chlor-4-trifluormethyl-phenyl)-carbamidsäure-4-butoxy-phenylester

N-(4-Trifluormethyl-phenyl)-carbamidsäure-4-pentoxy-phenylester

N-(3-Chlor-4-trifluormethyl-phenyl)-carbamidsäure-4-cyclohexoxy-phenylester

N-(3-Chlor-4-trifluormethyl-phenyl)-carbamidsäure-2-naphthyl-ester

N-(4-Trifluormethyl-phenyl)-carbamidsäure-2-(5,6,7,8-tetrahydronaphthyl)-ester

N-(4-Trifluormethyl-phenyl)-carbamidsäure-4-fluor-phenylester

N-(3-Chlor-4-trifluormethyl-phenyl)-carbamidsäure-4-brom-phenylester

N-(4-Trifluormethyl-phenyl)-carbamidsäure-4-cyan-phenylester

N-(3-Chlor-4-trifluormethyl-phenyl)-carbamidsäure-4-trifluormethyl-phenylester

N-(3-Chlor-4-trifluormethyl-phenyl)-carbamidsäure-pentafluorphenylester

N-(3-Chlor-4-trifluormethyl-phenyl)-carbamidsäure-4-cyan-thiophenylester

N-(4-Trifluormethyl-phenyl)-carbamidsäure-4-trifluormethyl-phenylester

N-(4-Trifluormethyl-phenyl)-carbamidsäure-pentafluorphenylester

N-(4-Trifluormethyl-phenyl)-carbamidsäure-4-cyan-thiophenylester

N-Cyclohexyl-carbamidsäure-4-methyl-phenylester

N-Cyclohexyl-carbamidsäure-4-ethyl-phenylester

N-Cyclohexyl-carbamidsäure-4-butyl-phenylester

N-Cyclohexyl-carbamidsäure-4-pentyl-phenylester

N-Cyclohexyl-carbamidsäure-4-heptyl-phenylester

N-Cyclohexyl-carbamidsäure-4-cyclohexyl-phenylester

N-Cyclohexyl-carbamidsäure-4-butoxy-phenylester

N-Cyclohexyl-carbamidsäure-4-pentoxy-phenylester

N-Cyclohexyl-carbamidsäure-2-(5,6,7,8-tetrahydronaphthyl)-ester

N-Cyclohexyl-carbamidsäure-4-fluor-phenylester

N-Cyclohexyl-carbamidsäure-4-cyan-phenylester

N-Cyclohexyl-carbamidsäure-4-trifluormethyl-phenylester

N-Cyclohexyl-carbamidsäure-pentafluorphenylester

N-Cyclohexyl-carbamidsäure-pentafluorbenzylester

N-Cyclohexyl-carbamidsäure-4-cyan-thiophenylester

N-(4-(4-Trifluormethyl-phenoxy-carbonylamino)-phenyl)-carbamidsäure-4-trifluor-phenylester

N-(4-(4-Fluor-phenoxy-carbonylamino)-phenyl)-carbamidsäure-4-fluor-phenylester

N-(4-(4-Pentafluor-phenoxy-carbonylamino)-phenyl)-carbamidsäure-pentafluor-phenylester

N-(4-(Pentafluor-benzyloxy-carbonylamino)-phenyl)-carbamidsäure-pentafluor-benzylester

N-(4-(4-Pentyl-phenoxy-carbonylamino)-phenyl)-carbamidsäure-4-pentyl-phenylester

N-Pentafluorphenyl-carbamidsäure-phenylester

N-Pentafluorphenyl-carbamidsäure-4-methyl-phenylester

N-Pentafluorphenyl-carbamidsäure-4-ethyl-phenylester

N-Pentafluorphenyl-carbamidsäure-4-propyl-phenylester

N-Pentafluorphenyl-carbamidsäure-4-butyl-phenylester

N-Pentafluorphenyl-carbamidsäure-4-pentyl-phenylester

N-Pentafluorphenyl-carbamidsäure-4-hexyl-phenylester

N-Pentafluorphenyl-carbamidsäure-4-heptyl-phenylester

N-Pentafluorphenyl-carbamidsäure-4-cyclohexyl-phenylester

N-Pentafluorphenyl-carbamidsäure-4-methoxy-phenylester

N-Pentafluorphenyl-carbamidsäure-4-butoxy-phenylester

N-Pentafluorphenyl-carbamidsäure-4-pentoxy-phenylester

N-Pentafluorphenyl-carbamidsäure-4-cyclohexoxy-phenylester

N-Pentafluorphenyl-carbamidsäure-2-naphthylester

N-Pentafluorphenyl-carbamidsäure-2-(5,6,7,8-tetrahydronaphthyl)-ester

N-Pentafluorphenyl-carbamidsäure-4-fluor-phenylester

N-Pentafluorphenyl-carbamidsäure-4-brom-phenylester

N-Pentafluorphenyl-carbamidsäure-4-cyan-phenylester

N-Pentafluorphenyl-carbamidsäure-4-trifluormethyl-phenylester
N-Pentafluorphenyl-carbamidsäure-pentafluorphenylester
N-Pentafluorphenyl-carbamidsäure-4-cyanthiophenylester
N-Pentafluorphenyl-carbamidsäure-4-methylthiophenylester
N-Pentafluorphenyl-carbamidsäure-4-butylthiophenylester
N-Pentafluorphenyl-carbamidsäure-4-pentylthiophenylester
N-Pentafluorphenyl-carbamidsäure-4-pentafluor-thiophenylester
N-Pentafluorphenyl-carbamidsäure-benzylester
N-Pentafluorphenyl-carbamidsäure-thiophenylester
N-Pentafluorphenyl-carbamidsäure-4-methylbenzylester
N-Pentafluorphenyl-carbamidsäure-4-butylbenzylester
N-Pentafluorphenyl-carbamidsäure-4-pentylbenzylester
N-Pentafluorphenyl-carbamidsäure-4-heptylbenzylester
N-Pentafluorphenyl-carbamidsäure-4-cyanbenzylester
N-Pentafluorphenyl-carbamidsäure-4-fluorbenzylester
N-Pentafluorphenyl-carbamidsäure-4-trifluormethyl-benzylester

*Beispiel 4*

Eine schwarze, dichroitische Farbstoffmischung, bestehend aus 1,4,5,8-Tetraamino-2,7-diphenoxyanthrachinon, 1-Amino-4-(4-tert.-butylthiophenyl)-anthrachinon-2-carbonsäure-methylester und 4-(4-Methoxy-phenylazo)-4'-benzyloxyazo-benzol, wird in einem Flüssigkristallgemisch, enthaltend

22 Gew.-% 4-(4-Cyanophenyl)-cyclohexylalkane ($C_3$: 7%; $C_5$: 15%)
15 Gew.-% 4-Cyanobiphenyl-4'-alkane ($C_2$: 6%; $C_3$: 3%; $C_4$: 6%)
5,5 Gew.-% 4-(4-Cyanobiphenyl)-cyclohexylpentan
5,5 Gew.-% 4-Cyanoterphenyl-4'-pentan
18 Gew.-% 1-(4-Pentylcyclohexyl)-4-(4-butylcyclohexylethylen)-benzol
8,5 Gew.-% 4-(4-Butylcyclohexyl)-4'-(4-pentylcyclohexylethylen)-2,2'-dihydrostilben
18 Gew.-% 4-(4-Ethoxyphenylcyclohexyl)-pentan
5,5 Gew.-% 4-Phenylcyclohexylpentan

gelöst, so dass eine bei Raumtemperatur gesättigte Lösung entsteht.

Man erhält eine tiefschwarze Lösung.

Die Lösung wird in eine Schaltzelle handelsüblicher Bauart mit Sn-In-Oxid Elektroden und Polyimid-Orientierungsschichten eingefüllt. Die Schichtdicke der Zellen schwankt zwischen 10 und 13,5 µm. Der Elektrodenabstand wird an der leeren Zelle bestimmt, die Messergebnisse aber auf einen Abstand von 10 µm normiert. Für die Abklingzeit erfolgt die Umrechnung nach der Beziehung

$$T_D^{10} = \frac{100 \cdot T_D^{exp.}}{d^2}$$

wobei $T_D^{exp}$ die gemessene Abklingzeit bei dem Elektrodenabstand d bedeutet. Der Ordnungsgrad S wird nach der üblichen Beziehung

$$S = \frac{\frac{A\|}{A\perp} - 1}{\frac{A\|}{A\perp} + 2}$$

bestimmt, wobei

A‖ für den minimalen, A⊥ für den maximalen Transmissionswert steht.

Folgende S-Werte werden erhalten:

bei 640 nm = 0,78
530 nm = 0,76
440 nm = 0,73

Setzt man der vorstehend beschriebenen Grundmischung 1,7 Gew.-%, bezogen auf das Gewicht der Grundmischung, eines der nachstehend genannten Ester zu, so werden die Abklingzeiten wesentlich verringert, ohne dass sich die Ordnungsgrade stark ändern.

4-Propylbenzoesäure-4-cyan-phenylester
4-Pentylbenzoesäure-4-cyan-phenylester
4-Octylbenzoesäure-4-cyan-phenylester
4-Butyl-cyclohexancarbonsäure-4-cyanphenylester
4-Butyl-cyclohexancarbonsäure-4-pentoxyphenylester
4-Trifluormethyl-2,3-dichlorbenzoesäure-cyclohexylester
4-Chlor-3-trifluormethyl-benzoesäure-pentafluorphenylester
Pentafluorbenzoesäure-pentafluorphenylester
Pentafluorbenzoesäure-pentafluorbenzylester
Benzoesäure-pentafluorphenylester
Pentafluorbenzoesäure-phenylester
4-Chlorbenzoesäure-pentafluorphenylester

Statt dieser Ester kann man auch eine der im Vorstehenden genannten carbonylgruppenhaltigen Verbindungen mit ähnlichem Erfolg einsetzen.

## Patentansprüche

1. Farbstoffhaltige Flüssigkristallzusammensetzungen, dadurch gekennzeichnet, dass sie mindestens eine Carbonylverbindung der allgemeinen Formel

$$R_1-(A_1)_m-Z_1-A_2-Z_2-(A_3)_n-R_2 \qquad (I)$$

wobei

$R_1$, $R_2$ Wasserstoff, Alkyl, das durch O- und/oder S-Atome unterbrochen und/oder substituiert sein kann, Alkoxy, das in der C-Kette durch O- und/oder S-Atome unterbrochen und/oder substituiert sein kann, gegebenenfalls substituiertes Cycloalkyl, gegebenenfalls substituiertes Cycloalkenyl, gegebenenfalls substituiertes Cycloalkoxy, F, Cl, Br, $-CN$, $-NO_2$ und $-CF_3$,

$A_1$, $A_2$, $A_3$ 1,4-Phenylen-, 1,4-Cyclohexylen-, 1,3-Dioxan-2,5-diyl-, Piperidin-1,4-diyl-, Piperazin-1,4-diyl, 2,7-Naphthylen, 1,4-Bicyclo-[2,2,2]-octylen- oder Pyrimidin-2,5-diylgruppen, wobei die genannten Gruppen unabhängig von der Substitution durch $R_1$, $R_2$ durch 1, 2, 3 oder 4 F-Atome und 1 oder 2 Substituenten aus der Reihe Cl, Br, $-CN$, $-CF_3$ substituiert sein können,

$Z_1$, $Z_2$ $-CO-O-$, $-O-CO-$, $-CH_2-CH_2-$, $-OCH_2-$, $-CH_2O-$, $-CH_2S-$, $-SCH_2-$, $-O-CO-O-$, $-O-CO-NH-$, $-NH-CO-O-$, $-CH_2-O-CO-NH-$, $-NH-CO-O-CH_2-$, $-NH-CO-S-CH_2-$, $-CH_2-S-CO-NH-$, $-CH_2-O-CO-$, $-NH-CO-S-$, $-S-CO-NH-$, $-CO-S-$, $-CO-SCH_2-$, $-CH_2-S-CO-$, $-S-CO-$, $-CO-O-CH_2-$, oder eine direkte Bindung, wobei mindestens eine der Gruppen $Z_1$, $Z_2$ die Gruppierung $-CO-$ enthalten muss,

n 0 oder 1 und

m 1 oder 2 bezeichnen, wobei für den Fall, dass m = 2 ist, die beiden Gruppen $A_1$ gleich oder verschieden sein können und diese Flüssigkristallzusammensetzungen mindestens einen zur Wasserstoffbrückenbindung befähigten dichroitischen Farbstoff enthalten.

2. Farbstoffhaltige Flüssigkristallzusammensetzungen gemäss Anspruch 1, dadurch gekennzeichnet, dass sie eine Carbonylverbindung der Formel I enthalten, wobei

$R_1$, $R_2$ für Wasserstoff, gegebenenfalls durch 1 oder 2 O- und S-Atome unterbrochenes $C_1$-$C_{10}$-Alkyl, das substituiert sein kann, gegebenenfalls substituiertes $C_1$-$C_{10}$-Alkoxy, das in der C-Kette durch 1 oder 2 O- und/oder S-Atome unterbrochen sein kann, gegebenenfalls substituiertes $C_3$-$C_7$-Cycloalkyl, gegebenenfalls substituiertes $C_3$-$C_7$-Cycloalkenyl, gegebenenfalls substituiertes $C_3$-$C_7$-Cycloalkoxy, F, Cl, Br, $-CN$, $-NO_2$ und $-CF_3$ stehen.

3. Farbstoffhaltige Flüssigkristallzusammensetzungen gemäss Anspruch 1, dadurch gekennzeichnet, dass sie eine Verbindung der Formel

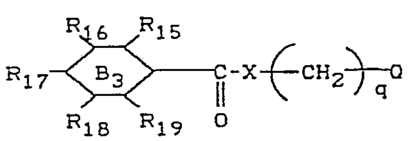 (IV)

enthalten,
in der

$B_3$ einen Phenyl- oder Cyclohexylring,

$R_{15}$, $R_{16}$, $R_{17}$, $R_{18}$, $R_{19}$ Wasserstoff, Alkyl, vorzugsweise $C_1$-$C_8$-Alkyl, Alkoxy, vorzugsweise $C_1$-$C_8$-Alkoxy, Cycloalkyl, vorzugsweise Cyclohexyl und Cyclopentyl, Cycloalkenyl, vorzugsweise Cyclohexenyl, Cycloalkoxy, vorzugsweise Cyclohexoxy und Cyclopentoxy, Halogen, vorzugsweise F, Cl, Br, $-CN$, $-NO_2$, $-CF_3$,

X Sauerstoff oder Schwefel,

q 0 oder 1 und

Q einen Rest der Formeln 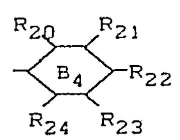 ,

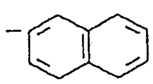 , 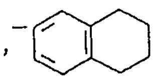 , 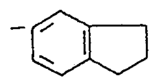

bezeichnen, wobei

$B_4$ für einen Phenyl- oder Cyclohexylring steht und

$R_{20}$, $R_{21}$, $R_{22}$, $R_{23}$, $R_{24}$ wie $R_{15}$-$R_{19}$ definiert sind.

4. Farbstoffhaltige Flüssigkristallzusammensetzungen gemäss Anspruch 1, dadurch gekennzeichnet, dass sie eine Verbindung der Formel

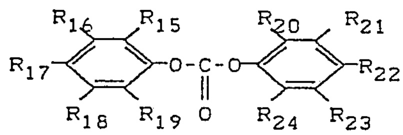 (V)

enthalten, in der $R_{15}$-$R_{24}$ die in Anspruch 3 angegebenen Bedeutungen haben.

5. Farbstoffhaltige Flüssigkristallzusammensetzungen gemäss Anspruch 1, dadurch gekennzeichnet, dass sie eine Verbindung der Formel

$$M-\underset{\underset{O}{\|}}{C}-X-(-CH_2-)_q-Q \qquad (VI)$$

enthalten,
in der

M einen Rest der Formeln 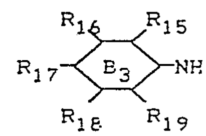 ,

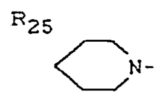 oder 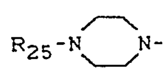

bezeichnet,

$R_{25}$ Wasserstoff oder $C_1$-$C_8$-Alkyl bedeutet und q, X, Q, $R_{15}$-$R_{19}$ und $B_3$ die in Anspruch 3 angegebenen Bedeutungen haben.

6. Farbstoffhaltige Flüssigkristallzusammensetzungen gemäss Anspruch 1, dadurch gekennzeichnet, dass sie eine Verbindung der Formel:

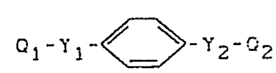 (VII)

enthalten,

in der $Q_1$ einen Rest der Formeln 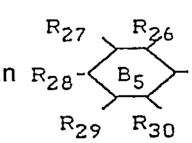 ,

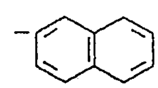 , 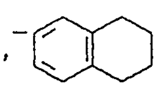 , 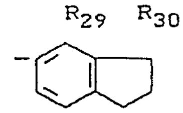

und $Q_2$ einen Rest der Formeln 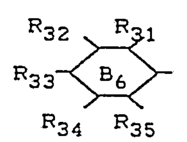 ,

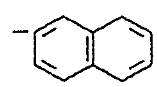 , 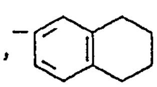 , 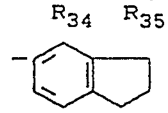

bezeichnen, wobei

$B_5$, $B_6$ für einen Phenyl- oder Cyclohexylring stehen

$R_{26}$-$R_{35}$ Wasserstoff, Alkyl, vorzugsweise $C_1$-$C_8$-Alkyl, Alkoxy, vorzugsweise $C_1$-$C_8$-Alkoxy,

Cycloalkyl, vorzugsweise Cyclohexyl und Cyclopentyl, Cycloalkenyl, vorzugsweise Cyclohexenyl, Cycloalkoxy, vorzugsweise Cyclohexoxy und Cyclopentoxy, Halogen, vorzugsweise F, Cl, Br, $-CN$, $-NO_2$ und $-CF_3$ bezeichnen,

$Y_1$ für

$-O-\underset{\underset{O}{\|}}{C}-NH-$, $-H_2C-O-\underset{\underset{O}{\|}}{C}-NH-$, $-H_2CO-$,

$-O-CH_2-$, $-H_2CS-$, $-S-CH_2$ und

$Y_2$ für

$-NH-\underset{\underset{O}{\|}}{C}-O-$, $-NH-\underset{\underset{O}{\|}}{C}-O-CH_2-$, $-\underset{\underset{O}{\|}}{C}-O-$,

$-\underset{\underset{O}{\|}}{C}-S-$, $-\underset{\underset{O}{\|}}{C}-O-CH_2-$ und $-\underset{\underset{O}{\|}}{C}-S-CH_2-$

stehen.

7. Flüssigkristallzusammensetzungen gemäss den Ansprüchen 1 bis 6, enthaltend mindestens einen Anthrachinonfarbstoff der Formel

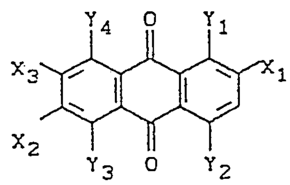

in der

$Y_1, Y_2, Y_3, Y_4$ Wasserstoff, Halogen, Nitro, Amino, Alkylamino, Arylamino, Acylamino, Cycloalkylamino, Aralkylamino, Alkoxy, Cycloalkoxy, Aryloxy, Aralkoxy, Alkylthio, Cycloalkylthio, Arylthio, Aralkylthio, Hydroxy oder Mercapto, wobei die genannten Kohlenwasserstoffreste substituiert oder annelliert sein können, mit der Massgabe, dass mindestens einer der Substituenten $Y_1$-$Y_4$ eine zur Wasserstoffbrückenbindung befähigte Gruppe ist,

$X_1, X_2, X_3$ Wasserstoff, Halogen, $-T_1$, $-OT_1$, $-ST_1$, $-CN$, $-CF_3$, $-COZT_1$, $=CH=N-T_1$

Z $-O-$ oder $-NH-$,

$T_1$ gegebenenfalls substituiertes Alkyl, wobei die Alkylkette durch ein O-Atom oder mehrere nicht nachbarständige O-Atome unterbrochen sein kann, vorzugsweise $C_1$-$C_{10}$-Alkyl, das durch 1 oder 2 O-Atome unterbrochen sein kann, gegebenenfalls substituiertes oder annelliertes Aryl, gegebenenfalls substituiertes Cycloalkyl, gegebenenfalls substituiertes Aralkyl oder einen gegebenenfalls substituierten heterocyclischen Rest bezeichnen.

8. Flüssigkristallzusammensetzungen gemäss den Ansprüchen 1 bis 7, enthaltend Azofarbstoffe.

9. Flüssigkristallzusammensetzungen gemäss den Ansprüchen 1 bis 8, enthaltend Farbstoff und carbonylhaltige Verbindung im Molverhältnis von 0,5 bis 1,5:1, vorzugsweise im Molverhältnis von etwa 1:1.

10. Verbindungen der Formel

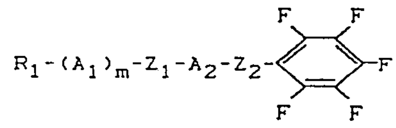

in der

$R_1$ Wasserstoff, Alkyl, das durch O- und/oder S-Atome unterbrochen und/oder substituiert sein kann, Alkoxy, das in der C-Kette durch O- und S-Atome unterbrochen und/oder substituiert sein kann, gegebenenfalls substituiertes Cycloalkyl, gegebenenfalls Cycloalkenyl, gegebenenfalls substituiertes Cycloalkoxy, F, Cl, Br, $-CN$, $-NO_2$ und $-CF_3$,

$A_1, A_2$ 1,4-Phenylen-, 1,4-Cyclohexylen-, 1,3-Dioxan-2,5-diyl-, Piperidin-1,4-diyl-, Piperazin-1,4-diyl-, 2,7-Naphthylen-, 1,4-Bicyclo-[2,2,2]-octylen- oder Pyrimidin-2,5-diylgruppen, wobei die genannten Gruppen unabhängig von der Substitution durch $R_1$, $R_2$ durch 1, 2, 3 oder 4 F-Atome und 1 oder 2 Substituenten aus der Reihe Cl, Br, $-CN$, $-CF_3$ substituiert sein können,

$Z_1, Z_2$ $-CO-O-$, $-O-CO-$, $-CH_2-CH_2-$, $-OCH_2-$, $-CH_2-O-$, $-CH_2S-$, $-SCH_2-$, $-O-CO-O-$, $-O-CO-NH-$, $-NH-CO-O-$, $-CH_2-O-CO-NH-$, $-NH-CO-O-CH_2-$, $-NH-CO-S-CH_2-$, $-CH_2-S-CO-NH-$, $-CH_2-O-CO-$, $-NH-CO-S-$, $-S-CO-NH-$, $-CO-S-$, $-CO-SCH_2-$, $-CH_2-S-CO-$, $-S-CO-$, $-CO-O-CH_2-$, oder eine direkte Bindung, wobei mindestens eine der Gruppen $Z_1$, $Z_2$ die Gruppierung $-CO-$ enthalten muss,

m 1 oder 2 bezeichnen, wobei für den Fall, dass $m = 2$ ist, die beiden Gruppen $A_1$ gleich oder verschieden sein können.

## Claims

1. Dyestuff-containing liquid crystal compositions, characterised in that they contain at least one carbonyl compound of the general formula

$$R_1-(A_1)_m-Z_1-A_2-Z_2-(A_3)_n-R_2 \qquad (I)$$

where

$R_1$ and $R_2$ denote hydrogen, alkyl which may be interrupted and/or substituted by O and/or S atoms, alkoxy which may be interrupted and/or substituted in the C chain by O and/or S atoms, optionally substituted cycloalkyl, optionally substituted cycloalkenyl, optionally substituted cycloalkoxy, F, Cl, Br, $-CN$, $-NO_2$ and $-CF_3$,

$A_1$, $A_2$ and $A_3$ denote 1,4-phenylene, 1,4-cyclohexylene, 1,3-dioxane-2,5-diyl, piperidine-1,4-diyl, piperazine-1,4-diyl, 2,7-naphthylene, 1,4-bicyclo[2.2.2]octylene or pyrimidine-2,5-diyl groups, and the said groups may be substituted by 1, 2, 3 or 4 F atoms and 1 or 2 substituents from the series comprising Cl, Br, $-CN$ and $-CF_3$ independently of the substitution by $R_1$ and $R_2$,

$Z_1, Z_2$ denote $-CO-O-$, $-O-CO-$, $-CH_2-CH_2-$, $-OCH_2-$, $-CH_2O-$, $-CH_2S-$,

$-SCH_2-$, $-O-CO-O-$, $-O-CO-NH-$, $-NH-CO-O-$, $-CH_2-O-CO-NH-$, $-NH-CO-O-CH_2-$, $-NH-CO-S-CH_2$, $-CH_2-S-CO-NH-$, $-CH_2-O-CO-$, $-NH-CO-S-$, $-S-CO-NH-$, $-CO-S-$, $-CO-SCH_2-$, $-CH_2-S-CO-$, $-S-CO-$, $-CO-O-CH_2-$, or a direct bond, and at least one of the groups $Z_1$ and $Z_2$ must contain the grouping $-CO-$,

n denotes 0 or 1 and

m denotes 1 or 2, and in the event that m = 2, the two groups $A_1$ may be identical or different and these liquid crystal compositions contain at least one dichroic dyestuff capable of forming a hydrogen bridge bond.

2. Dyestuff-containing liquid crystal compositions according to Claim 1, characterised in that they contain a carbonyl compound of the formula I, where

$R_1$ and $R_2$ represent hydrogen, $C_1$-$C_{10}$-alkyl, which is optionally interrupted by 1 or 2 O and S atoms and may be substituted, optionally substituted $C_1$-$C_{10}$-alkoxy which may be interrupted in the C chain by 1 or 2 O and/or S atoms, optionally substituted $C_3$-$C_7$-cycloalkyl, optionally substituted $C_3$-$C_7$-cycloalkenyl, optionally substituted $C_3$-$C_7$-cycloalkoxy, F, Cl, Br, $-CN$, $-NO_2$ and $-CF_3$.

3. Dyestuff-containing liquid crystal compositions according to Claim 1, characterised in that they contain a compound of the formula

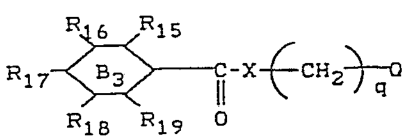 (IV)

in which

$B_3$ denotes a phenyl or cyclohexyl ring,

$R_{15}$, $R_{16}$, $R_{17}$, $R_{18}$ and $R_{19}$ denote hydrogen, alkyl, preferably $C_1$-$C_8$-alkyl, alkoxy, preferably $C_1$-$C_8$-alkoxy, cycloalkyl, preferably cyclohexyl and cyclopentyl, cycloalkenyl, preferably cyclohexenyl, cycloalkoxy, preferably cyclohexoxy and cyclopentoxy, halogen, preferably, F, Cl, Br, $-CN$, $-NO_2$, $-CF_3$,

X denotes oxygen or sulphur,

q denotes 0 or 1 and

Q denotes a radical of the formulae

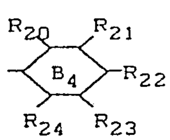 , 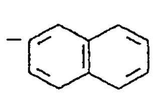 ,

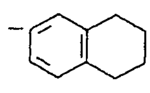 , 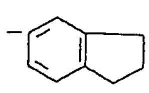

where

$B_4$ represents a phenyl or cyclohexyl ring and $R_{20}$, $R_{21}$, $R_{22}$, $R_{23}$ and $R_{24}$ are defined as $R_{15}$-$R_{19}$.

4. Dyestuff-containing liquid crystal compositions according to Claim 1, characterised in that they contain a compound of the formula

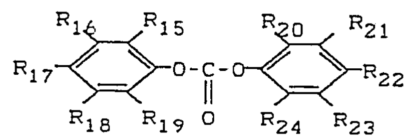 (V)

in which $R_{15}$-$R_{24}$ have the meanings specified in Claim 3.

5. Dyestuff-containing liquid crystal compositions according to Claim 1, characterised in that they contain a compound of the formula

$$M-\underset{\underset{O}{\|}}{C}-X-(-CH_2-)_q-Q \qquad (VI)$$

in which

M denotes a radical of the formulae

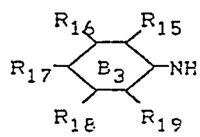 , 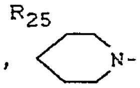 or 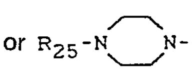

$R_{25}$ represents hydrogen or $C_1$-$C_8$-alkyl and q, X, Q, $R_{15}$-$R_{19}$ and $B_3$ have the meanings specified in Claim 3.

6. Dyestuff-containing liquid crystal compositions according to Claim 1, characterised in that they contain a compound of the formula:

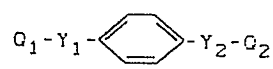 (VII)

in which $Q_1$ denotes a radical of the formulae

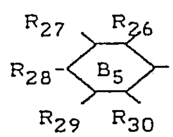 , 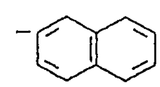 ,

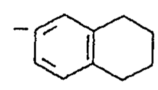 , 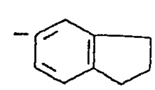

and $Q_2$ denotes a radical of the formulae

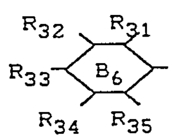 , 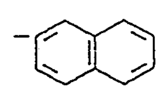 ,

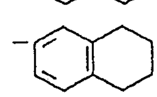 , 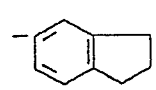

where

$B_5$ and $B_6$ represent a phenyl or cyclohexyl ring,

$R_{26}$-$R_{35}$ denote hydrogen, alkyl, preferably $C_1$-$C_8$-alkyl, alkoxy, preferably $C_1$-$C_8$-alkoxy, cycloalkyl, preferably cyclohexyl, and cyclopentyl, cycloalkenyl, preferably cyclohexenyl, cycloalkoxy, preferably cyclohexoxy and cyclopentoxy, halogen, preferably F, Cl, Br, $-CN$, $-NO_2$ and $-CF_3$,

$Y_1$ represents

$$-O-\underset{\underset{O}{\|}}{C}-NH-,\ -H_2C-O-\underset{\underset{O}{\|}}{C}-NH-,\ -H_2CO-,$$

$-O-CH_2-$, $-H_2CS-$, $-S-CH_2$ and

$Y_2$ represents

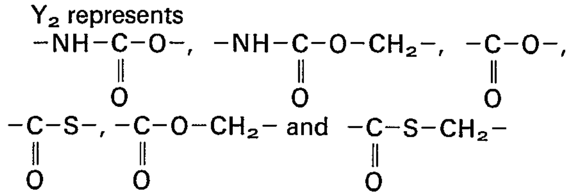

7. Liquid crystal compositions according to Claims 1 to 6, containing at least one anthraquinone dyestuff of the formula

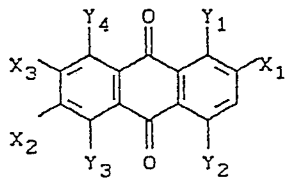

in which

$Y_1$, $Y_2$, $Y_3$ and $Y_4$ denote hydrogen, halogen, nitro, amino, alkylamino, arylamino, acylamino, cycloalkylamino, aralkylamino, alkoxy, cycloalkoxy, aryloxy, aralkoxy, alkylthio, cycloalkylthio, arylthio, aralkylthio, hydroxy or mercapto, and the said hydrocarbon radicals may be substituted or fused, with the proviso that at least one of the substitutants $Y_1$-$Y_4$ is a group capable of hydrogen bridge bonding,

$X_1$, $X_2$ and $X_3$ denote hydrogen, halogen, $-T_1$, $-OT_1$, $-ST_1$, $-CN$, $-CF_3$, $-COZT_1$, $=CH=N-T_1$

Z denotes $-O-$ or $-NH-$,

$T_1$ denotes optionally substituted alkyl, where the alkyl chain may be interrupted by an O atom or several non-adjacent O atoms, preferably $C_1$-$C_{10}$-alkyl, which may be interrupted by 1 or 2 O atoms, optionally substituted or fused aryl, optionally substituted cycloalkyl, optionally substituted aralkyl, or an optionally substituted heterocyclic radical.

8. Liquid crystal compositions according to Claims 1 to 7, containing azo dyestuffs.

9. Liquid crystal compositions according to Claims 1 to 8, containing the dyestuff and the carbonyl-containing compound in the molar ratio of 0.5 to 1.5:1, preferably in the molar ratio of approximately 1:1.

10. Compounds of the formula

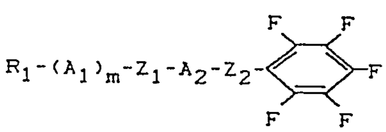

in which

$R_1$ denotes hydrogen, alkyl, which may be interrupted and/or substituted by O and/or S atoms, alkoxy, which may be interrupted and/or substituted in the C chain by O and S atoms, optionally substituted cycloalkyl, optionally substituted cycloalkenyl, optionally substituted cycloalkoxy, F, Cl, Br, $-CN$, $-NO_2$ and $-CF_3$,

$A_1$ and $A_2$ denote 1,4-phenylene, 1,4-cyclohexylene, 1,3-dioxane-2,5-diyl, piperidine-1,4-diyl, piperazine-1,4-diyl, 2,7-naphthylene, 1,4-bicyclo[2.2.2]octylene or pyrimidine-2,5-diyl groups, and the said groups may be substituted by 1, 2, 3 or 4 F atoms and 1 or 2 substituents from the series comprising Cl, Br, $-CN$ and $-CF_3$, independently of the substitution by $R_1$ and $R_2$,

$Z_1$ and $Z_2$ denote $-CO-O-$, $-O-CO-$, $-CH_2-CH_2-$, $-OCH_2-$, $-CH_2O-$, $-CH_2S-$, $-SCH_2-$, $-O-CO-O-$, $-O-CO-NH-$, $-NH-CO-O-$, $-CH_2-O-CO-NH-$, $-NH-CO-O-CH_2-$, $-NH-CO-S-CH_2$, $-CH_2-S-CO-NH-$, $-CH_2-O-CO-$, $-NH-CO-S-$, $-S-CO-NH-$, $-CO-S-$, $-CO-SCH_2-$, $-CH_2-S-CO-$, $-S-CO-$, $-CO-O-CH_2-$, or a direct bond, and at least one of the groups $Z_1$ and $Z_2$ must contain the grouping $-CO-$,

m denotes 1 or 2, and in the event that m = 2, the two groups $A_1$ may be identical or different.

## Revendications

1. Compositions pour cristaux liquides contenant des colorants, caractérisées en ce qu'elles contiennent au moins un composé carbonylique de formule générale

$$R_1-(A_1)_m-Z_1-A_2-Z_2-(A_3)_n-R_2 \qquad (I)$$

dans laquelle

$R_1$, $R_2$ représentent l'hydrogène, un groupe alkyle qui peut être interrompu et/ou substitué par des atomes de O et/ou de S, un groupe alkoxy qui peut être interrompu et/ou substitué dans la chaîne carbonée par des atomes de O et/ou de S, un groupe cycloalkyle éventuellement substitué, un groupe cycloalcényle éventuellement substitué, un groupe cycloalkoxy éventuellement substitué, F, Cl, Br, $-CN$, $-NO_2$ et $-CF_3$,

$A_1$, $A_2$, $A_3$ représentent des groupes 1,4-phénylène, 1,4-cyclohexylène, 1,3-dioxanne-2,5-diyle, pipéridine-1,4-diyle, pipérazine-1,4-diyle, 2,7-naphtylène, 1,4-bicyclo-[2,2,2]-octylène ou pyrimidine-2,5-diyle, les groupes mentionnés pouvant être substitués, indépendamment de la substitution par $R_1$, $R_2$, par 1, 2, 3 ou 4 atomes de F et 1 ou 2 substituants de la série Cl, Br, $-CN$, $-CF_3$,

$Z_1$, $Z_2$ représentent $-CO-O-$, $-O-CO-$, $-CH_2-CH_2-$, $-OCH_2-$, $-CH_2O-$, $-CH_2S-$, $-SCH_2-$, $-O-CO-O-$, $-O-CO-NH-$, $-NH-CO-O-$, $-CH_2-O-CO-NH-$, $-NH-CO-O-CH_2-$, $-NH-CO-S-CH_2-$, $-CH_2-S-CO-NH-$, $-CH_2-O-CO-$, $-NH-CO-S-$, $-S-CO-NH-$, $-CO-S-$, $-CO-SCH_2-$, $-CH_2-S-CO-$, $-S-CO-$, $-CO-O-CH_2-$, ou une liaison simple, l'un au moins des groupes $Z_1$, $Z_2$ devant contenir le groupement $-CO-$,

<u>n</u> a la valeur 0 ou 1, et

<u>m</u> a la valeur 1 ou 2, les deux groupes $A_1$ pouvant être identiques ou différents au cas où <u>m</u> est égal à 2, et ces compositions pour cristaux liquides contiennent au moins un colorant dichroïque apte à la liaison par pont hydrogène.

2. Compositions pour cristaux liquides contenant des colorants suivant la revendication 1, caractérisées en ce qu'elles contiennent un composé carbonylique de formule I, dans laquelle

$R_1$, $R_2$ représentent l'hydrogène, un groupe alkyle en $C_1$ à $C_{10}$ interrompu, le cas échéant, par un ou deux atomes de O et S, qui peut être substitué, un groupe alkoxy en $C_1$ à $C_{10}$ éventuellement substitué qui peut être interrompu dans la chaîne carbonée par 1 ou 2 atomes de O et/ou de S, un groupe cycloalkyle en $C_3$ à $C_7$ éventuellement substitué, un groupe cycloalcényle en $C_3$ à $C_7$ éventuellement substitué, un groupe cycloalkoxy en $C_3$ à $C_7$ éventuellement substitué, F, Cl, Br, $-CN$, $-NO_2$ et $-CF_3$.

3. Compositions pour cristaux liquides contenant des colorants suivant la revendication 1, caractérisées en ce qu'elles contiennent un composé de formule

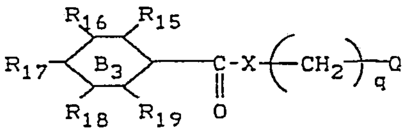 (IV)

dans laquelle

$B_3$ est un noyau phényle ou cyclohexyle,

$R_{15}$, $R_{16}$, $R_{17}$, $R_{18}$, $R_{19}$ représentent l'hydrogène, un groupe alkyle, de préférence un groupe alkyle en $C_1$ à $C_8$, un groupe alkoxy, de préférence alkoxy en $C_1$ à $C_8$, un groupe cycloalkyle, de préférence cyclohexyle et cyclopentyle, un groupe cycloalcényle, de préférence cyclohexényle, un groupe cycloalkoxy, de préférence cyclohexoxy et cyclopentoxy, un halogène, de préférence F, Cl, Br, un groupe $-CN$, $-NO_2$, $-CF_3$,

X est l'oxygène ou le soufre,

q a la valeur 0 ou 1, et

Q est un reste de formules 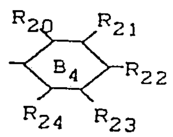 ,

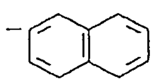 , 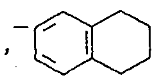 , 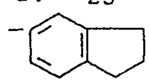

dans lesquelles

$B_4$ représente un noyau phényle ou cyclohexyle, et

$R_{20}$, $R_{21}$, $R_{22}$, $R_{23}$, $R_{24}$ sont définis comme $R_{15}$ à $R_{19}$.

4. Compositions pour cristaux liquides contenant des colorants suivant la revendication 1, caractérisées en ce qu'elles contiennent un composé de formule

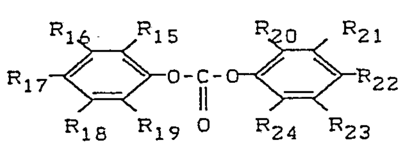 (V)

dans laquelle $R_{15}$-$R_{24}$ ont les définitions indiquées dans la revendication 3.

5. Compositions pour cristaux liquides contenant des colorants suivant la revendication 1, caractérisées en ce qu'elles contiennent un composé de formule

$$M-\underset{\displaystyle \overset{\|}{O}}{C}-X-(-CH_2-)_q-Q \qquad (VI)$$

dans laquelle

M est un reste de formules 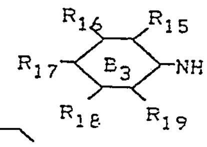 ,

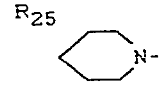 ou 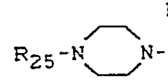

$R_{25}$ désigne l'hydrogène ou un groupe alkyle en $C_1$ à $C_8$, et

q, X, Q, $R_{15}$-$R_{19}$ et $B_3$ ont les définitions indiquées dans la revendication 3.

6. Compositions pour cristaux liquides contenant des colorants suivant la revendication 1, caractérisées en ce qu'elles contiennent un composé de formule

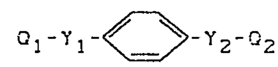 (VII)

dans laquelle

$Q_1$ est un reste de formules 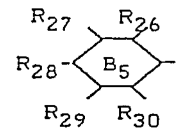 ,

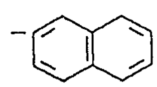 , 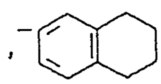 , 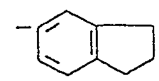

et $Q_2$ est un reste de formules 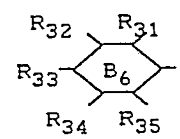 ,

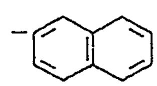 , 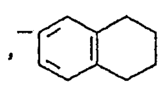 , 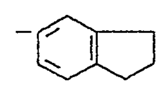

formules dans lesquelles

$B_5$, $B_6$ représentent un noyau phényle ou cyclohexyle

$R_{26}$-$R_{35}$ représentent l'hydrogène, un groupe alkyle, de préférence alkyle en $C_1$ à $C_8$, un groupe alkoxy, de préférence alkoxy en $C_1$ à $C_8$, un groupe cycloalkyle, de préférence cyclohexyle et cyclopentyle, un groupe cycloalcényle, de préférence cyclohexényle, un groupe cycloalkoxy, de préférence cyclohexoxy et cyclopentoxy, un halogène, de préférence F, Cl, Br un groupe $-CN$, $-NO_2$ et $-CF_3$,

$Y_1$ représente

$$-O-\underset{\displaystyle \overset{\|}{O}}{C}-NH-,\ -H_2C-O-\underset{\displaystyle \overset{\|}{O}}{C}-NH-,\ -H_2CO-,$$

$$-O-CH_2-,\ -H_2CS-,\ -S-CH_2 \text{ et}$$

$Y_2$ représente

$$-NH-\underset{\displaystyle \overset{\|}{O}}{C}-O-,\quad -NH-\underset{\displaystyle \overset{\|}{O}}{C}-O-CH_2-,\quad -\underset{\displaystyle \overset{\|}{O}}{C}-O-,$$

$$-\underset{\displaystyle \overset{\|}{O}}{C}-S-,\ -\underset{\displaystyle \overset{\|}{O}}{C}-O-CH_2- \text{ et } -\underset{\displaystyle \overset{\|}{O}}{C}-S-CH_2-$$

7. Compositions pour cristaux liquides suivant les revendications 1 à 6, contenant au moins un colorant anthraquinonique de formule

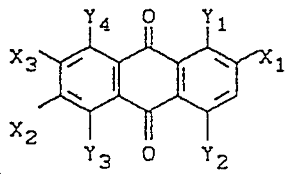

dans laquelle

$Y_1$, $Y_2$, $Y_3$, $Y_4$ représentent l'hydrogène, un halogène, un groupe nitro, amino, alkylamino, arylamino, acylamino, cycloalkylamino, aralkylamino, alkoxy, cycloalkoxy, aryloxy, aralkoxy, alkylthio, cycloalkylthio, arylthio, aralkylthio, hydroxy ou mercapto, les restes hydrocarbonés mentionnés pouvant être substitués ou condensés, sous réserve qu'au moins l'un des substituants $Y_1$-$Y_4$ soit un groupe apte à la liaison par pont hydrogène,

$X_1$, $X_2$, $X_3$ représentent l'hydrogène, un halogène, un groupe $-T_1$, $-OT_1$, $-ST_1$, $-CN$, $-CF_3$, $-COZT_1$, $=CH=N-T_1$,

Z représente $-O-$ ou $-NH-$,

T est un groupe alkyle éventuellement substitué, la chaîne alkyle pouvant être interrompue par un atome d'oxygène ou par plusieurs atomes d'oxygène n'occupant pas des positions voisines, de préférence un groupe alkyle en $C_1$ à $C_{10}$, qui peut être interrompu par 1 ou 2 atomes d'oxygène, un groupe aryle éventuellement substitué ou condensé, un groupe cycloalkyle éventuellement substitué, un groupe aralkyle éventuellement substitué ou un reste hétérocyclique éventuellement substitué.

8. Compositions pour cristaux liquides suivant les revendications 1 à 7, contenant des colorants azoïques.

9. Compositions pour cristaux liquides suivant les revendications 1 à 8, contenant un colorant et un composé carbonylique dans le rapport molaire de 0,5 à 1,5:1, de préférence dans le rapport molaire d'environ 1:1.

10. Composé de formule

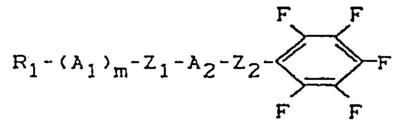

dans laquelle

$R_1$ désigne l'hydrogène, un groupe alkyle qui peut être interrompu et/ou substitué par des atomes de O et/ou de S, un groupe alkoxy qui peut être interrompu et/ou substitué dans la chaîne carbonée par des atomes de O et de S, un groupe cycloalkyle éventuellement substitué, un groupe cycloalcényle éventuellement substitué, un groupe cycloalkoxy éventuellement substitué, F, Cl, Br, un groupe $-CN$, $-NO_2$ et $-CF_3$,

$A_1$, $A_2$ représentent des groupes 1,4-phénylène, 1,4-cyclohexylène, 1,3-dioxanne-2,5-diyle, pipéridine-1,4-diyle, pipérazine-1,4-diyle, 2,7-naphtylène, 1,4-bicyclo-[2,2,2]-octylène ou pyrimidine-2,5-diyle, les groupes mentionnés pouvant être substitués, indépendamment de la substitution par $R_1$, $R_2$, par 1, 2, 3 ou 4 atomes de F et 1 ou 2 substituants de la série Cl, Br, $-CN$, $-CF_3$,

$Z_1$, $Z_2$ représentent $-CO-O-$, $-O-CO-$, $-CH_2-CH_2-$, $-OCH_2-$, $-CH_2O-$, $-CH_2S-$, $-SCH_2-$, $-O-CO-O-$, $-O-CO-NH-$, $-NH-CO-O-$, $-CH_2-O-CO-NH-$, $-NH-CO-O-CH_2-$, $-NH-CO-S-CH_2-$, $-CH_2-S-CO-NH-$, $-CH_2-O-CO-$, $-NH-CO-S-$, $-S-CO-NH-$, $-CO-S-$, $-CO-SCH_2-$, $-CH_2-S-CO-$, $-S-CO-$, $-CO-O-CH_2-$,

ou une liaison simple, l'un au moins des groupes $Z_1$, $Z_2$ devant contenir le groupement $-CO-$,

<u>m</u> a la valeur 1 ou 2, les deux groupes $A_1$ pouvant être identiques ou différents au cas où <u>m</u> est égal à 2.